(19) Europäisches Patentamt
European Patent Office
Office européen des brevets

(11) **EP 3 508 544 A1**

(12) **EUROPEAN PATENT APPLICATION**
published in accordance with Art. 153(4) EPC

(43) Date of publication:
**10.07.2019 Bulletin 2019/28**

(51) Int Cl.:
*C09J 7/20* (2018.01)  *C09J 133/04* (2006.01)
*C09J 5/00* (2006.01)  *C09J 183/04* (2006.01)
*C09J 121/00* (2006.01)  *E04F 13/07* (2006.01)

(21) Application number: **17846760.1**

(22) Date of filing: **05.09.2017**

(86) International application number:
**PCT/JP2017/031986**

(87) International publication number:
**WO 2018/043757 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.09.2016 JP 2016173044**

(71) Applicant: **Nitto Denko Corporation**
**Ibaraki-shi, Osaka 567-8680 (JP)**

(72) Inventors:
• **DOI, Asami**
**Ibaraki-shi**
**Osaka 567-8680 (JP)**
• **TAKAHASHI, Akiko**
**Ibaraki-shi**
**Osaka 567-8680 (JP)**
• **CHIBA, Mizuho**
**Ibaraki-shi**
**Osaka 567-8680 (JP)**
• **SHIMOKITA, Keisuke**
**Ibaraki-shi**
**Osaka 567-8680 (JP)**
• **OOTAKE, Hironao**
**Ibaraki-shi**
**Osaka 567-8680 (JP)**

(74) Representative: **Grünecker Patent- und
Rechtsanwälte
PartG mbB
Leopoldstraße 4
80802 München (DE)**

(54) **PRESSURE BONDING-TYPE ADHESIVE MEMBER**

(57)    A pressure bonding adhesive member containing a support 1, a first adhesive layer 2 formed on one surface of the support 1, and a second adhesive layer 3 formed on the other surface of the support 1, wherein the second adhesive layer 3 contains a body layer 3A and plural convex parts 3B formed on a surface of the body layer 3A, and the second adhesive layer 3 has an adhesive force higher than that of the first adhesive layer 2.

Fig. 1

**Description**

[Technical Field]

The present invention relates to a pressure bonding adhesive member preferable for pasting application of wall decoration materials such as wallpaper and the like and a method for pasting a wall decoration material by using the pressure bonding adhesive member.

[Background Art]

In recent years, DIY in do-it-yourself carpenter ("DIY" is an abbreviation of Do It Yourself, meaning "do by yourself") is attracting attention. It is becoming popular to carry out wallpaper replacement without asking specialists. When wallpaper is replaced by DIY, it is a general practice to paste a new wallpaper on the wallpaper already covering the wall and serving as an underlayer ((often expensive) wallpaper firmly fixed to the wall by a specialist at the time of construction of the structure, hereinafter to be also referred to as "underlying wallpaper"). It is therefore necessary to peel off the new wallpaper after completion of use and keep the underlying wallpaper clean. For this end, for example, when a double-sided adhesive tape is used to paste a new wallpaper, an execution method is adopted in which a masking tape with low adhesive force is first applied to form frames (with multiple rectangular frames aligned side by side) on the underlying wallpaper, (one surface) of a double-sided adhesive tape with high adhesive force and approximately the same width is adhered onto the masking tape to firmly fix the new wallpaper thereon, and the new wallpaper is pasted on the double-sided adhesive tape (the other surface) while peeling off the release liner thereof. Generally, a plurality of new wallpapers are pasted and joined together on a wall (underlying wallpaper). However, it is not easy to paste wallpapers in the desired positions with high accuracy, and once a wallpaper adheres to the double-sided adhesive tape, firm adhesion takes place. Even when the wallpaper adheres to an undesired position, the position of the wallpaper cannot be adjusted. Thus, there was a problem that the pattern matching at the seam of wallpaper was not easy and the wallpaper could not be pasted easily to form a beautiful appearance. Also, once a wallpaper adheres to the double-sided adhesive tape, firm adhesion takes place. As a result, even when wrinkles occur in the wallpaper, it is not possible to peel off and paste again the wallpaper.

For example, to prevent a damage on the wall at the time of cutting wallpapers in the butt work of two wallpapers, patent document 1 proposes an adhesive tape for applying a wallpaper which contains metal foil therein. However, it cannot prevent wrinkles, air entrapment (biting) and the like during pasting a wallpaper, and adjustment of the position of the wallpaper is also difficult.

[Document List]

[Patent documents]

patent document 1: JP-A-7-278504

[SUMMARY OF THE INVENTION]

[Problems to be Solved by the Invention]

Therefore, the problem to be solved by the present invention is to provide a pressure bonding adhesive member that enables anyone, even non-experts, to easily paste wall decoration materials such as wallpaper and the like to form a beautiful appearance.

In addition, it aims to provide a pressure bonding adhesive member that enables anyone, even non-experts, to easily paste wall decoration materials such as wallpaper and the like to form a beautiful appearance, and that can be peeled off after use.

[Means of Solving the Problems]

The present inventors have conducted intensive studies in an attempt to solve the aforementioned problems and found that positional adjustment of a new wallpaper on the surface of a wall (underlying wallpaper) is possible by making, in a double-coated adhesive type pressure bonding adhesive member, the adhesive force sufficiently different between the two adhesive layers on one side and the other side thereof, using an adhesive layer on one side, which has a low adhesive force, for adhesion to a wall surface (underlying wallpaper), and using an adhesive layer on the other side, which has a high adhesive force and a constitution composed of a body layer and plural convex parts selectively formed on the surface of the body layer, for adhesion to a new wallpaper. The present invention could be completed based on such finding and is characterized by the following.

[1] A pressure bonding adhesive member comprising
a support,
a first adhesive layer formed on one surface of the support, and
a second adhesive layer formed on the other surface of the support,
wherein the second adhesive layer comprises a body layer and plural convex parts formed on a surface of the body layer, and
the second adhesive layer has an adhesive force higher than that of the first adhesive layer.
[2] The pressure bonding adhesive member of the above-mentioned [1], wherein the second adhesive layer has a 180° peel adhesive force to SUS which is higher than that of the first adhesive layer and the difference therein is not less than 2N/20 mm.
[3] The pressure bonding adhesive member of the above-mentioned [1] or [2], wherein the first adhesive layer has a 180° peel adhesive force to SUS of not more than 20N/20 mm.
[4] The pressure bonding adhesive member of any one of the above-mentioned [1] to [3], wherein the first adhesive layer comprises one or more kinds selected from the group consisting of a rubber adhesive, an acrylic adhesive and a silicone adhesive, and the second adhesive layer has a body layer comprising one or more kinds selected from the group consisting of a rubber adhesive, an acrylic adhesive and a silicone adhesive.
[5] The pressure bonding adhesive member of any one of the above-mentioned [1] to [4], wherein the plural convex parts of the second adhesive layer are each formed from an aggregate of acrylic copolymer particles.
[6] The pressure bonding adhesive member of the above-mentioned [5], wherein the acrylic copolymer particle is an acrylic core-shell type copolymer particle.
[7] The pressure bonding adhesive member of the above-mentioned [5] or [6], wherein the aggregate of the acrylic copolymer particles comprises a tackifier.
[8] The pressure bonding adhesive member of any one of the above-mentioned [5] to [7], wherein the acrylic copolymer particle has a sol weight average molecular weight exceeding $1.0 \times 10^4$ and not more than $1.0 \times 10^7$.
[9] The pressure bonding adhesive member of any one of the above-mentioned [3] to [8], wherein the second adhesive layer has a 180° peel adhesive force to SUS of not less than 3N/20 mm.
[10] The pressure bonding adhesive member of any one of the above-mentioned [1] to [9], wherein the pressure bonding adhesive member is used for pasting a wall decoration material to a wall, the first adhesive layer is used for adhesion to a wall surface, and the second adhesive layer is used for adhesion to the wall decoration material.
[11] The pressure bonding adhesive member of the above-mentioned [10], wherein the wall is a side wall inside a structure, the wall decoration material is a wallpaper, and the wall surface is an underlying wallpaper.
[12] The pressure bonding adhesive member of any one of the above-mentioned [1] to [11], comprising a first release liner protecting the first adhesive layer and a second release liner protecting the second adhesive layer.
[13] A method for pasting a wall decoration material to a wall, comprising adhering the first adhesive layer of the pressure bonding adhesive member of any of the above-mentioned [1] to [9] to a wall surface, bringing the wall decoration material into contact with plural convex parts of the second adhesive layer of the pressure bonding adhesive member, pressurizing the wall decoration material as it is to adhere and fix the wall decoration material to the second adhesive layer when the position of the wall decoration material on the wall surface is an intended position, or, when the position of the wall decoration material on the wall surface is not an intended position, transversely moving the wall decoration material as it is or once moving the wall decoration material away from the plural convex parts of the second adhesive layer and adjusting the position of the wall decoration material on the wall surface to the intended position, after which pressurizing the wall decoration material to adhere and fix the wall decoration material to the second adhesive layer.
[14] The method of the above-mentioned [13], wherein the wall is a side wall inside a structure, the wall decoration material is a wallpaper, and the wall surface is an underlying wallpaper.

In the present invention, the "wall" is a concept including not only side walls in a structure but also ceiling wall and floor wall, typically side walls. The "wall surface" is a concept including not only an underlying wallpaper but also the surface of a wall such as cement, concrete, mortar, wood and the like, typically, an underlying wallpaper. In addition, the "wall decoration material" is a concept including wallpaper, mosaic tile, carpet, cushion floor, tile carpet, floor tile, flooring material, baseboard, ceiling material and the like, typically, a wallpaper.

[Effect of the Invention]

The pressure bonding adhesive member of the present invention does not express a high adhesive force to a wall decoration material such as wallpaper and the like even when the wall decoration material comes into contact with the plural convex parts on the surface of the second adhesive layer unless the wall decoration material is sufficiently pressurized. Thus, for example, the wall decoration material can be moved on the second adhesive layer of the pressure bonding adhesive member after adhesion of the first adhesive layer of the pressure bonding adhesive member to the wall surface, and the position of the wall decoration material on the surface of the wall can be easily adjusted. As a result, pattern matching and the like at the seam of the wall decoration material can be performed precisely and easily on the surface of the wall. Since the wall decoration material can be moved while being in contact with the surface (plural convex parts) of the second adhesive layer, for example, even when the wall decoration material is a soft material such as wallpaper and the like, unwanted wrinkle in the wallpaper or air entrapment therein does not occur. After alignment of the wall decoration material, when the wall decoration material is pressurized against the second adhesive layer with a sufficient pressure in the direction toward the wall, the body layer of the second adhesive layer expresses a high adhesive force and the wall decoration material is adhered to the pressure bonding adhesive member with a sufficient adhesive force. Therefore, using the pressure bonding adhesive member of the present invention, the wall decoration material can be pasted in a clean appearance easily and with good workability, which in turn enables work simplification and time reduction of the pasting work.

In addition, since the adhesive force of the second adhesive layer of the pressure bonding adhesive member, which is used for adhesion of the wall decoration material, is higher, by a sufficient difference in the adhesive force, than the adhesive force of the first adhesive layer used for adhesion to the wall surface, the pressure bonding adhesive member can be detached together with the wall decoration material from the wall surface (underlying wallpaper), during which the detachment is possible without a damage or adhesive residue on the wall surface (underlying wallpaper).

[Brief Description of the Drawings]

Fig. 1 is a schematic sectional view of the pressure bonding adhesive member of one embodiment of the present invention, in which a role winding the pressure bonding adhesive member and an enlarged sectional view of the tip of the pressure bonding adhesive member.
Fig. 2 shows a flat plane view of the second adhesive layer of one embodiment of the pressure bonding adhesive member of the present invention.

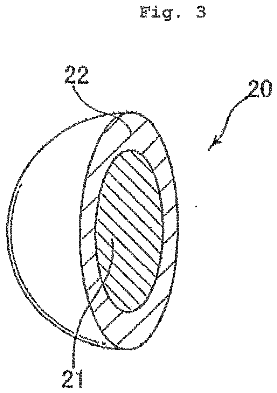

Fig. 3 is a schematic view of the internal structure of the core-shell (meth)acrylic copolymer particle.
Fig. 4(A) to Fig. 4(C) schematically show pasting a wall decoration material on a wall surface by using the pressure bonding adhesive member of the present invention.

[Description of Embodiments]

The present invention is more specifically explained in the following by referring to preferable embodiments thereof.

In the present specification, unless particularly indicated, "an adhesive" means a "pressure-sensitive adhesive". The "(meth)acryl" means both "acryl" and "methacryl". In addition, the "(meth)acrylate" means both "acrylate" and "methacrylate". Also, "$C_{x-y}$" shows the range of the carbon number and means that the carbon number is not less than x and not more than y. The numerical range defined using the symbol "-" includes numerical values of the both ends (upper limit and lower limit) of "-". For example, "0.01 - 5" shows not les than 0.01 and not more than 5.

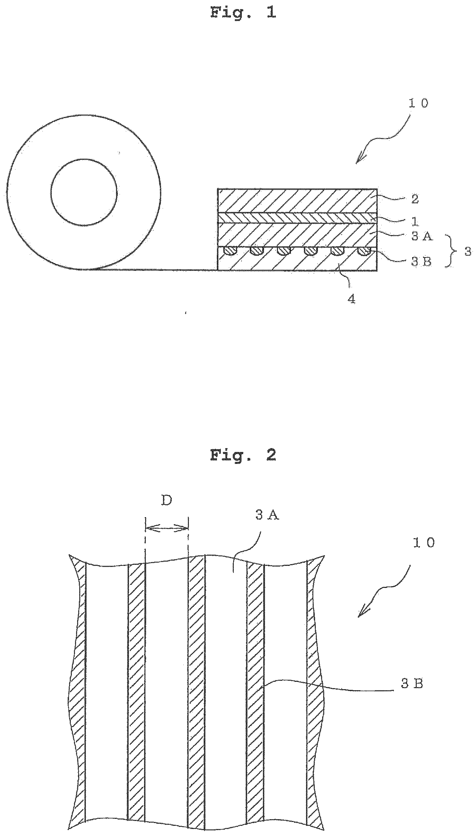

Fig. 1 is a schematic view of the pressure bonding adhesive member of one embodiment of the present invention, in which a role winding a sheet-like pressure bonding adhesive member and an enlarged sectional view of the pressure bonding adhesive member on the tip side of the roll.

The pressure bonding adhesive member of the present invention (hereinafter to be also simply referred to as "adhesive member") is mainly characterized in that it has, as shown by the pressure bonding adhesive member 10 in such one embodiment, a support 1, a first adhesive layer 2 formed on one surface of support 1, and a second adhesive layer 3 formed on the other surface of support 1, the second adhesive layer 3 is constituted of a body layer 3A and plural convex parts 3B formed on the surface of the body layer 3A, and the second adhesive layer 3 has an adhesive force larger than that of the first adhesive layer 2.

In Fig. 1, the layer accorded with symbol 4 is a release liner that protects the second adhesive layer 3, and Fig. 2 is a schematic flat plane view of the second adhesive layer 3 as viewed from above in the vertical direction by peeling off the release liner 4. In the pressure bonding adhesive member 10 in this one embodiment, the plural convex parts 3B formed on the surface of the body layer 3A of the second adhesive layer 3 are provided in a stripe shape.

The pressure bonding adhesive member of the present invention is a sheet (thin and wide), and the size (flat plane area) thereof is not particularly limited and determined according to the size (flat plane area) of the wall decoration material. Generally, a sheet with a narrow width is also called a "tape", and the "sheet" in the present invention is also a concept including the "tape".

The pressure bonding adhesive member of the present invention is not necessarily in the form of a sheet having a planar shape substantially the same as that of the wall decoration material and to be adhered to the whole back surface of the wall decoration material. For example, the pressure bonding adhesive member in a tape shape may be pasted in a frame shape so as to partition the area planned for pasting the wall decoration material on the wall surface, and the wall decoration material may be adhered to the thus-obtained frames of the pressure bonding adhesive member, whereby the wall decoration material is pasted on the wall surface.

When the pressure bonding adhesive member of the present invention is used as a tape, the width is preferably about 10 - 200 mm, preferably about 15 - 100 mm, from the viewpoint of adhesion workability and the like.

The constituent elements of the pressure bonding adhesive member 10 are described in detail below.

[Support]

In the pressure bonding adhesive member of the present invention 10, the support 1 is not particularly limited, and a resin film, paper, cloth, rubber sheet, foam sheet, metal foil, complex of these and the like can be used. Examples of the resin film include polyolefin films such as polyethylene (PE), polypropylene(PP), ethylene-propylene copolymer and the like; polyester films such as polyethylene terephthalate (PET) and the like; vinyl chloride resin film; vinyl acetate resin film; polyimide resin film; polyamide resin film; fluorine resin film; cellophane and the like. Examples of the paper include Japanese paper, craft paper, glassine, woodfree paper, synthetic paper, top coated paper and the like. Examples of the cloth include woven and non-woven cloths by single or mixed spinning and the like of various fibrous substances and the like. Examples of the above-mentioned fiber substance include cotton, staple fiber, Manila hemp, pulp, rayon, acetate fiber, polyester fiber, polyvinyl alcohol fiber, polyamide fiber, polyolefin fiber and the like. Examples of the rubber sheet include natural rubber sheet, butyl rubber sheet and the like. Examples of the foam sheet include foam polyurethane sheet, foam polychloroprene rubber sheet, and the like. Examples of the metal foil include aluminum foil, copper foil and the like. The non-woven fabric as used herein is a concept referring to a nonwoven fabric for an adhesive sheet mainly used in the field of adhesive sheet, and is typically non-woven fabric (sometimes also called "paper") produced using a common paper machine. The resin film mentioned here is typically a non-porous resin sheet and is a concept that is distinguished from non-woven fabric (that is, does not include non-woven fabric). The above-mentioned resin film may be any of a non-oriented film, a uniaxially-oriented film, and a biaxially-oriented film. The surface of the substrate on which the adhesive layer is formed may be subjected to a surface treatment such as application of a primer, corona discharge treatment, plasma treatment, and the like.

Support 1 is particularly preferably non-woven fabric or Japanese paper from the viewpoint of positional adjustment workability of adhesive member, concave-convex followability to wallpaper, and the like.

The thickness of the support is not particularly limited, and can be selected appropriately according to the material of the support, the kind of the adhesive layer, and the like. It is generally 10 $\mu$m - 1000 $\mu$m, preferably 10 $\mu$m - 100 $\mu$m. In non-woven fabric, the weight per unit area (basis weight) is preferably not less than 5 g/m$^2$, more preferably not less than 10 g/m$^2$, from the viewpoint of application workability in which the wallpaper is held and attached. It is preferably not more than 80 g/m$^2$, more preferably not more than 50 g/m$^2$, from the viewpoint of cuttability.

[First adhesive layer]

The first adhesive layer 2 is used for adhesion to a wall surface (that is, an adhesive layer for adhesion of pressure bonding adhesive member 10 to wall surface). The adhesive to be used for the first adhesive layer 2 is not particularly limited. For example, depending on the kind of the base polymer (component that accounts for not less than 50% by weight of the whole polymer components) constituting the adhesive, rubber adhesive, acrylic adhesive, polyamide adhesive, silicone adhesive, polyester adhesive, ethylene-vinyl acetate copolymer adhesive, polyurethane adhesive and the like can be mentioned, and it can be selected appropriately from these pressure-sensitive adhesives. Preferably, it is one or more kinds selected from the group consisting of rubber adhesive, acrylic adhesive and silicone adhesive. Among them, acrylic adhesive having an acrylic polymer as a base polymer can be used particularly preferably since it is superior in various properties such as heat resistance, weatherability and the like and can express desired properties by selecting the kind and the like of the monomer unit constituting the base polymer (acrylic polymer).

[Acrylic adhesive]

The acrylic adhesive generally contains, as a base polymer, an acrylic polymer having (meth)acrylic acid alkyl ester as a main monomer unit.

Examples of the (meth)acrylic acid alkyl ester include (meth)acrylic acid C$_{1-20}$ alkyl esters such as methyl(meth)acrylate, ethyl(meth)acrylate, propyl(meth)acrylate, n-butyl(meth)acrylate, isobutyl(meth)acrylate, sec-butyl(meth)acrylate, t-butyl(meth)acrylate, hexyl (meth)acrylate, 2-ethylhexyl(meth)acrylate, cyclohexyl(meth)acrylate, t-butylcyclohexyl(meth)acrylate, isoamyl(meth)acrylate, n-pentyl(meth)acrylate, isopentyl(meth)acrylate, cyclopentyl(meth) acrylate, n-octyl(meth)acrylate, isooctyl(meth)acrylate, cyclooctyl(meth)acrylate, n-nonyl(meth)acrylate, isononyl (meth)acrylate, n-decyl(meth)acrylate, isodecyl(meth)acrylate, n-dodecyl(meth)acrylate, undecyl(meth)acrylate, isoundecyl (meth)acrylate, isomyristyl(meth)acrylate, n-tridecyl(meth)acrylate, n-tetradecyl(meth)acrylate, n-pentadecyl(meth)acrylate, n-octadecyl(meth)acrylate, n-nonadecyl(meth)acrylate, n-eicosyl(meth)acrylate and the like. Among these, (meth)acrylic acid $C_{1-12}$ alkylester is preferable, and (meth)acrylic acid $C_{1-8}$ alkylester is more preferable. One or more kinds of (meth)acrylic acid alkyl esters can be selected and used.

The content of (meth)acrylic acid alkyl ester in the whole monomer unit constituting the acrylic polymer is preferably 50 - 99.9 wt%, more preferably 70 - 99 wt%. When it is less than 50 wt%, a sufficient adhesive force may not be obtained often.

The acrylic polymer can contain other monomer unit copolymerizable with (meth)acrylic acid alkyl ester with the aim to improve cohesive force, heat resistance, crosslinking property and the like. Examples of such monomer unit include carboxy group-containing monomers such as acrylic acid, methacrylic acid, carboxyethyl(meth)acrylate, carboxypentyl(meth)acrylate, itaconic acid, maleic acid, fumaric acid, crotonic acid and the like; hydroxy group-containing monomers such as 2-hydroxyethyl(meth)acrylate, 2-hydroxypropyl(meth)acrylate, 4-hydroxybutyl(meth)acrylate, 2-hydroxyhexyl(meth)acrylate, 6-hydroxyhexyl(meth)acrylate, 8-hydroxyoctyl(meth)acrylate, 10-hydroxydecyl(meth)acrylate, 12-hydroxylauryl (meth)acrylate, (4-hydroxymethylcyclohexyl)methylacrylate, N-methylol(meth)acryl amide, N-hydroxy(meth)acryl amide, vinyl alcohol, allyl alcohol, 2-hydroxyethylvinylether, 4-hydroxybutylvinylether, diethylene glycol monovinylether, (4-hydroxymethylcyclohexyl)methyl methacrylate and the like; sulfo group-containing monomers such as styrene sulfonic acid, allyl sulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid and the like; phosphate group-containing monomers such as 2-hydroxyethylacryloyl phosphate and the like; (N-substituted)amide monomers such as (meth)acrylamide, N,N-dimethyl(meth)acrylamide, N-butyl(meth)acrylamide, N-methylol(meth)acrylamide, N-methylolpropane(meth)acrylamide and the like; amino(meth)acrylic acid alkyl ester monomers such as aminoethyl (meth)acrylate, N,N-dimethylaminoethyl (meth)acrylate, t-butylaminoethyl (meth)acrylate and the like; alkoxy(meth)acrylic acid alkyl ester monomers; maleimide monomers such as N-cyclohexylmaleimide, N-isopropylmaleimide, N-laurylmaleimide, N-phenylmaleimide and the like; itaconimide monomers such as N-methylitaconimide, N-ethylitaconimide, N-butylitaconimide, N-octylitaconimide, N-2-ethylhexylitaconimide, N-cyclohexylitaconimide, N-laurylitaconimide and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide and the like; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, N-vinylcaprolactam and the like; cyanoacrylic ester monomers such as acrylonitrile, methacrylonitrile and the like; epoxy group-containing acrylic monomers such as glycidyl (meth)acrylate and the like; glycol acrylic ester monomers such as polypropylene glycol (meth)acrylate, methoxyethylglycol (meth)acrylate, methoxypolypropylene glycol (meth)acrylate and the like; acrylic ester monomers having a heterocycle, a halogen atom, a silicon atom or the like such as tetrahydrofurfuryl (meth)acrylate, fluorine (meth)acrylate, silicone (meth)acrylate and the like; multifunctional monomers such as hexanediol di(meth)acrylate, (poly)ethylene glycol di(meth)acrylate, polypropylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate, hexyl di(meth)acrylate and the like; olefin monomers such as isoprene, dibutadiene, isobutylene and the like; vinyl ether monomers such as vinyl ether and the like, and the like. Among these, a carboxy group-containing monomer or a hydroxy group-containing monomer is preferable.

One or more kinds of these other monomer units can be used.

The acrylic copolymer can be produced by subjecting the aforementioned (meth) acrylic acid alkyl ester alone, or (meth)acrylic acid alkyl ester and other monomer to be a monomer unit to polymerization by a known appropriate method. For example, various radical polymerizations such as solution polymerization, bulk polymerization, emulsion polymerization and the like, and the like are preferable. The polymer may be any of random copolymer, block copolymer, graft copolymer and the like, and random copolymer is preferable. The polymerization initiator, chain transfer agent, emulsifier and the like used for radical polymerization are not particularly limited and can be appropriately selected and used. The weight average molecular weight of the acrylic copolymer can be controlled by the amounts of the polymerization initiator and chain transfer agent to be used and reaction conditions.

Examples of the polymerization initiator include, but are not limited to, azo-based initiators such as 2,2'-azobisisobutyronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropionamidine)disulfate, 2,2'-azobis(N,N'-dimethyleneisobutylamidine), 2,2'-azobis[N-(2-carboxyethyl)-2-methylpropionamidine]hydrate (VA-057 manufactured by Wako Pure Chemical Industries, Ltd.)

and the like; persulfates such as potassium persulfate and ammonium persulfate and the like; peroxide-based initiators such as di(2-ethylhexyl)peroxydicarbonate, di(4-t-butylcyclohexyl)peroxydicarbonate, di-sec-butylperoxydicarbonate, t-butyloxyneodecanoate, t-hexylperoxypivalate, t-butylperoxypivalate, dilauroylperoxide, di-n-octanoylperoxide, 1,1,3,3-tetramethylbutylperoxy-2-ethylhexanoate, di(4-methylbenzoyl)peroxide, dibenzoylperoxide, t-butylperoxyisobutyrate, 1,1-di(t-hexylperoxy)cyclohexane, t-butylhydroperoxide, hydrogen peroxide and the like; and redox initiators combining a peroxide and a reducing agent such as a combination of persulfate and sodium bisulfite, a combination of peroxide and sodium ascorbate and the like.

One or more kinds of polymerization initiators can be used. The amount thereof to be used is preferably about 0.005 - 1 part by weight, more preferably about 0.02 - 0.5 parts by weight, per 100 parts by weight of monomer.

Examples of the chain transfer agent include lauryl mercaptan, glycidyl mercaptan, mercaptoacetic acid, 2-mercaptoethanol, thioglycolic acid, thioglycolic acid 2-ethylhexyl, 2,3-di mercapto-1-propanol and the like. The chain transfer agent may be used singly or two or more kinds may be used in a mixture. The amount thereof to be used is not more than about 0.1 parts by weight per 100 parts by weight of the total amount of monomer.

Examples of the emulsifier to be used for emulsion polymerization include anionic emulsifiers such as sodium lauryl sulfate, lauryl ammonium sulfate, sodium dodecylbenzenesulfonate, polyoxyethylene alkyl ether ammonium sulfate, sodium polyoxyethylene alkyl ether sulfate, polyoxyethylenealkylphenylether sodium sulfate and the like; nonionic emulsifiers such as polyoxyethylene alkyl ether, polyoxyethylenealkylphenylether, polyoxyethylene fatty acid ester, polyoxyethylene-polyoxypropylene block polymer and the like; and the like. One or more kinds of these emulsifiers can be used. The amount of the emulsifier to be used is 0.3 - 5 parts by weight per 100 parts by weight of the total amount of monomer, and more preferably 0.5 - 1 part by weight in view of the polymerization stability and mechanical stability.

The adhesive can contain a crosslinking agent in addition to a base polymer. Examples of the crosslinking agent include polyvalent isocyanurate, polyfunctional isocyanate compound, polyfunctional melamine compound, polyfunctional epoxy compound, polyfunctional oxazoline compound, polyfunctional aziridine compound, metal chelate compound and the like. Particularly, from the aspects of broad utility, polyvalent isocyanurate or polyfunctional isocyanate compound is preferably used. One or more kinds of these can be used.

Examples of the aforementioned polyvalent isocyanurate include polyisocyanurate form of hexamethylenediisocyanate and the like. The aforementioned polyvalent isocyanurate used may be a commercially available product and, specifically, trade name "DURANATE TPA-100" (manufactured by Asahi Kasei Chemicals Corporation), trade name "CORONATE HK", "CORONATE HX", "CORONATE 2096" (manufactured by Nippon Polyurethane Industry Co., Ltd.) and the like can be mentioned.

The aforementioned polyfunctional isocyanate compound is not particularly limited as long as it is a compound having at least two or more isocyanate groups (preferably not less than 3 isocyanate groups) in a molecule. Specifically, aliphatic polyisocyanates, alicyclic polyisocyanates, aromatic polyisocyanates and the like can be mentioned.

Examples of the aforementioned aliphatic polyisocyanates include 1,2-ethylenediisocyanate, tetramethylenediisocyanates such as 1,2-tetramethylenediisocyanate, 1,3-tetramethylenediisocyanate, 1,4-tetramethylenediisocyanate and the like, hexamethylenediisocyanates such as 1,2-hexamethylenediisocyanate, 1,3-hexamethylenediisocyanate, 1,4-hexamethylenediisocyanate, 1,5-hexamethylenediisocyanate, 1,6-hexamethylenediisocyanate, 2,5-hexamethylenediisocyanate and the like, 2-methyl-1,5-pentanediisocyanate, 3-methyl-1,5-pentanediisocyanate, lysinediisocyanate and the like.

Examples of the aforementioned alicyclicpolyisocyanates include isophoronediisocyanate, cyclohexyldiisocyanates such as 1,2-cyclohexyldiisocyanate, 1,3-cyclohexyldiisocyanate, 1,4-cyclohexyldiisocyanate and the like, cyclopentyldiisocyanates such as 1,2-cyclopentyldiisocyanate, 1,3-cyclopentyldiisocyanate and the like, hydrogenated xylylene diisocyanate, hydrogenated tolylene diisocyanate, hydrogenated diphenylmethanediisocyanate, hydrogenated tetramethylxylenediisocyanate, 4,4'-dicyclohexylmethanediisocyanate and the like.

Examples of the aforementioned aromatic polyisocyanates include 2,4-tolylene diisocyanate, 2,6-tolylene diisocyanate, 4,4'-diphenylmethanediisocyanate, 2,4'-diphenylmethanediisocyanate, 2,2'-diphenylmethanediisocyanate, 4,4'-diphenyletherdiisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropanediisocyanate, m-phenylenediisocyanate, p-phenylenediisocyanate, naphthylene-1,4-diisocyanate, naphthylene-1,5-diisocyanate, 3,3'-dimethoxydiphenyl-4,4'-diisocyanate, xylylene-1,4-diisocyanate, xylylene-1,3-diisocyanate and the like.

As the aforementioned polyfunctional isocyanate compound, dimer and trimer of aromatic aliphatic polyisocyanates can be used besides the aforementioned aliphatic polyisocyanates, alicyclic polyisocyanates, aromatic polyisocyanates. Specifically, dimer and trimer of diphenylmethanediisocyanate, reaction product of trimethylolpropane and tolylene diisocyanate, reaction product of trimethylolpropane and hexamethylenediisocyanate, polymerized substance such as polymethylenepolyphenylisocyanate, polyetherpolyisocyanate, polyester polyisocyanate and the like, and the like can be mentioned.

The aforementioned polyfunctional isocyanate compound used may be a commercially available product. Specifically, trade name "CORONATE L" (manufactured by Nippon Polyurethane Industry Co., Ltd.) as a trimer adduct of trimethylolpropane and tolylene diisocyanate, trade name "CORONATE HL" (manufactured by Nippon Polyurethane Industry Co., Ltd.) as a trimer adduct of trimethylolpropane and hexamethylenediisocyanate, and the like can be mentioned.

As the aforementioned polyfunctional melamine compound, methylated methylolmelamine, butylated hexamethylolmelamine and the like can be mentioned. As the aforementioned polyfunctional epoxy compound, diglycidyl aniline, glyceroldiglycidyl ether and the like can be mentioned.

The kind and the amount of the aforementioned crosslinking agent are not particularly limited. It is preferable to determine them such that the formed adhesive layer has a gel fraction of preferably about 30 - 98 wt%, more preferably about 35 - 95 wt%. When it is less than 30 wt%, sufficient retaining force (cohesive property) cannot be achieved and when it exceeds 98 wt%, crosslinking density becomes high and high adhesive force (tack strength) is not obtained easily.

For example, it is preferably 0.01 - 10 parts by weight, more preferably 0.02 - 5 parts by weight, per 100 parts by weight of the acrylic polymer. When the amount is less than 0.01 parts by weight, retaining force (cohesion strength) of the adhesive layer cannot be improved and the heat resistance may decrease and the like. When it exceeds 10 parts by weight, the crosslinking reaction proceeds too far to unpreferably decrease the adhesive force.

The acrylic adhesive preferably contains a tackifier in addition to a base polymer to provide an adhesive layer expressing a high adhesive force. The tackifier is not particularly limited as long as it is solid at ordinary temperature. Examples thereof include terpene tackifier, terpene phenol tackifier, rosin tackifier, styrene tackifier (e.g., styrene resin, poly($\alpha$-methylstyrene) and the like) and the like, and rosin tackifier is preferable. Examples of the rosin tackifier include modified rosin (disproportionated rosin and polymerized rosin, and other chemically-modified rosin etc.) obtained by modifying unmodified rosin (natural rosin) such as gum rosin, wood rosin, tall oil rosin and the like by disproportionation, polymerization and the like, various rosin derivatives and the like. Examples of the rosin derivative include rosin esters such as rosin ester obtained by esterifying unmodified rosin with alcohols, modified rosin ester obtained by esterifying modified rosin such as hydrogenated rosin, disproportionated rosin, polymerized rosin or the like with alcohols, and the like; unsaturated fatty acid-modified rosins obtained by modifying unmodified rosin or modified rosin (hydrogenated rosin, disproportionated rosin, polymerized rosin etc.) with unsaturated fatty acid; unsaturated fatty acid-modified rosin esters obtained by modifying rosin ester with an unsaturated fatty acid; rosin alcohols obtained by reduction-treating a carboxyl group in unmodified rosin, modified rosin (hydrogenated rosin, disproportionated rosin, polymerized rosin etc.), unsaturated fatty acid-modified rosins or unsaturated fatty acid-modified rosin esters; metal salts of rosins (particularly, rosin esters) such as unmodified rosin, modified rosin, various rosin derivatives and the like; and the like. In addition, as the rosin derivative, a rosin phenol resin obtained by adding phenol to rosins (unmodified rosin, modified rosin, various rosin derivatives etc.) with an acid catalyst and subjecting same to thermal polymerization and the like can also be used. Examples of the alcohols to be used for obtaining the above-mentioned rosin esters include divalent alcohols such as ethylene glycol, diethylene glycol, propylene glycol, neopentyl glycol and the like, trivalent alcohols such as glycerol, trimethylolethane, trimethylolpropane and the like, tetravalent alcohols such as pentaerythritol, diglycerol and the like, hexavalent alcohols such as dipentaerythritol etc. and the like. Among the rosin tackifiers above, modified rosin ester is preferable, and polymerized rosin ester (polymerized rosin esterified with alcohols) is particularly preferable.

As a tackifier, a commercially available product can be used. For example, examples of the polymerized rosin ester include SUPER ESTER E-650 [manufactured by Arakawa Chemical Industries, Ltd.], SUPER ESTER E-788 [manufactured by Arakawa Chemical Industries, Ltd.], SUPER ESTER E-786-60 [manufactured by Arakawa Chemical Industries, Ltd.], SUPER ESTER E-865 [manufactured by Arakawa Chemical Industries, Ltd.], SUPER ESTER E-865NT [manufactured by Arakawa Chemical Industries, Ltd.], HARIESTER SK-508 [manufactured by Harima Chemicals, Inc.], HARIESTER SK-508H [manufactured by Harima Chemicals, Inc.], HARIESTER SK-816E [manufactured by Harima Chemicals, Inc.], HARIESTER SK-822E [manufactured by Harima Chemicals, Inc.], HARIESTER SK-323NS [manufactured by Harima Chemicals, Inc.] and the like.

When what is called a "water dispersion type acrylic adhesive", which is a dispersion liquid in which an acrylic polymer produced by emulsion polymerization is dispersed as a dispersoid in an aqueous medium after emulsion polymerization, is used as the acrylic copolymer, an emulsion type tackifier (that is, dispersion in which tackifier (resin component) is dispersed as a dispersoid in an aqueous medium) can be used preferably. The emulsion type tackifier is preferably an emulsion type rosin tackifier.

A tackifier having a softening temperature of not less than 80°C is preferable, a tackifier having a softening temperature of not less than 90°C is more preferable, a tackifier having a softening temperature of not less than 100°C is still more preferable, a tackifier having a softening temperature of not less than 110°C is particularly preferable, and a tackifier having a softening temperature of not less than 120°C is most preferable. From the aspect of prevention of a decrease in the initial adhesive force, a tackifier having a softening temperature of not more than 160°C is preferable, and a tackifier having a softening temperature of not more than 150°C is more preferable. The softening temperature as used herein refers to a ring and ball softening temperature Ts measured according to JIS K 2207 ring and ball softening point (temperature) test method and using a constant-load extrusion type capillary rheometer (SHIMADZU flow tester CFT-500D) and a value measured under the conditions of die: 1 mm x 1 mm, load: 4.9N, temperature rising rate: 5°C/min.

The amount of the tackifier to be used is not particularly limited, and is preferably 5 - 50 parts by weight, more preferably 10 - 30 parts by weight, per 100 parts by weight of the base polymer of the adhesive. When the blended amount is less than 5 parts by weight, a sufficient adhesive force-improving effect may not be expected and when it exceeds 50 parts by weight, the initial adhesive force tends to decrease.

The acrylic adhesive may contain, in addition to a crosslinking agent and a tackifier, additives such as stabilizer, filler, colorant, ultraviolet absorber, antioxidant and the like as a component other than the base polymer.

(Silicone adhesive)

When a silicone adhesive is used as the adhesive, the silicone adhesive is not particularly limited, and known or conventionally-used silicone adhesives can be used. For example, addition-type silicone adhesive, peroxide-curable silicone adhesive, condensation-type silicone adhesive and the like can be used. The silicone adhesive may be of one-liquid type or two-liquid type. One or more kinds of silicone adhesives can be used.

Examples of preferable silicone adhesive include a composition containing 100 parts by weight of peroxide curable silicone resin, 1.2 - 3.2 parts by weight of organic peroxide curing agent, and 2 - 9 parts by weight of addition reaction curable silicone rubber. This composition particularly demonstrates superior load durability even in a high-temperature environment, for example, environment exceeding 200°C.

The peroxide curable silicone resin contains peroxide-curable silicone rubber and/or partial condensate thereof. The silicone rubber may be raw rubber (gum). The peroxide curable silicone resin may contain at least one kind selected from silicone resin and a partial condensate thereof. The composition of the peroxide curable silicone resin is not particularly limited as long as it contains peroxide curable silicone rubber and/or partial condensate thereof.

The peroxide curable silicone rubber is not particularly limited and is, for example, organopolysiloxane containing dimethylsiloxane as the main constituent unit. A hydroxyl group or other functional group may be introduced into organopolysiloxane where necessary. Specific examples of organopolysiloxane include dimethylpolysiloxane. The weight average molecular weight of organopolysiloxane is generally not less than 180,000, preferably 280,000 - 1,000,000, more preferably 500,000 - 900,000. The peroxide curable silicone resin may contain two or more kinds of peroxide curable silicone rubbers, and may contain two or more kinds of partial condensates of peroxide curable silicone rubber.

Silicone resin is not particularly limited and is, for example, organopolysiloxane having at least one kind of unit selected from M unit ($R_3SiO_{1/2}$), Q unit ($SiO_2$), T unit ($RSiO_{3/2}$) and D unit ($R_2SiO$). R in each unit independently shows a monovalent hydrocarbon group or hydroxyl group. A functional group may be introduced into the copolymer as necessary, and the introduced functional group may cause a crosslinking reaction. As the silicone resin, what is called MQ resin constituted of M unit and Q unit is preferable.

When the silicone resin is an MQ resin, the molar ratio of the content percentage of M unit and that of Q unit (M unit:Q unit) in the resin is, for example, 0.3:1 - 1.5:1, preferably 0.5:1 - 1.3:1.

The peroxide curable silicone resin may contain two or more kinds of silicone resins and two or more kinds of partial condensates of silicone resin.

When the peroxide curable silicone resin contains a silicone resin, the weight ratio of the silicone rubber and the silicone resin in the resin is not particularly limited and is, for example, silicone rubber: silicone resin of 100:110 - 100:220, preferably 100:160 - 100:190. When the peroxide curable silicone resin contains a partial condensate of silicone rubber and/or a partial condensate of silicone resin, the above-mentioned weight ratio can be determined from the weight of silicone rubber and silicone resin before partial condensation.

The organic peroxide curing agent is not particularly limited. Examples of the curing agent include benzoyl peroxide, t-butyl peroxybenzoate, dicumyl peroxide, t-butylcumyl peroxide, di-t-butyl peroxide, 2,5-dimethyl-2,5-di(t-butylperoxy)hexane, 2,4-dichlorobenzoyl peroxide, 1,1-bis(t-butylperoxy)-3,3,5-trimethylcyclohexane, and 2,5-dimethyl-2,5-di(t-butylperoxy)hexyne-3. One or more kinds of organic peroxide curing agents can be used in combination.

The amount of the organic peroxide curing agent contained in the silicone adhesive composition is 1.2 - 3.2 parts by weight, preferably 1.4 - 3.0 parts by weight, per 100 parts by weight of the peroxide curable silicone resin. When the amount of the curing agent is less than the lower limit value of 1.2 parts by weight, the adhesive force of the adhesive composition becomes insufficient. When the amount of the curing agent exceeds the upper limit value of 3.2 parts by weight, the load durability under high temperature environment tends to decrease.

The silicone adhesive composition contains an addition reaction curing silicone rubber. The silicone rubber may be raw rubber (gum). As the addition reaction curing silicone rubber, a known addition reaction curing silicone rubber can be used. The addition reaction curing silicone rubber contains an addition polymerizable group, and the group is, for example, a vinyl group.

The amount of the addition reaction curing silicone rubber is preferably 2 - 9 parts by weight, more preferably 3 - 7 parts by weight, per 100 parts by weight of the peroxide curable silicone resin. When the amount of the addition reaction curing silicone rubber falls within this range, a silicone adhesive composition exhibiting superior load durability even under high temperature environment is obtained.

The silicone adhesive composition can contain two or more kinds of addition reaction curing silicone rubbers.

The addition reaction curing silicone rubber preferably shows an elastic modulus upon curing (storage elastic modulus G') of not less than 0.01 MPa and not more than 1 MPa at ordinary temperature (25°C), and not less than 0.01 MPa and not more than 1 MPa at 200°C. The elastic modulus is more preferably not less than 0.1 MPa and not more than 1 MPa at ordinary temperature, and not less than 0.1 MPa and not more than 1 MPa at 200°C. The storage elastic modulus G' can be measured by a rheometer. In a specific example of the measurement method, a measurement target is molded, laminated and the like to a thickness of about 1.5 mm, and elastic modulus is measured using a rheometer (e.g., manufactured by Rheometric Scientific, Advanced Rheometric Expansion System (ARES)) under the measurement conditions of shear mode, frequency 1Hz and temperature rise rate 5°C/min in a temperature range of -20°C to 250°.

The silicone adhesive composition can contain, where necessary, components other than peroxide curable silicone resin, organic peroxide curing agent, and addition reaction curable silicone rubber, such as additive, catalyst, crosslinking agent, solvent for adjusting the viscosity of adhesive composition, and the like. The catalyst is, for example, a platinum catalyst, and the crosslinking agent is, for example, a siloxane crosslinking agent having an SiH group.

Gel fraction of the silicone adhesive composition after curing (gel fraction in cured product) is preferably 40 - 60%, more preferably 45 - 55%. For example, the gel fraction of an adhesive composition after curing can be determined as follows by immersion that dissolves components other than gel in the adhesive layer.

An adhesive composition after curing, for example, an adhesive layer (about 0.1 g) obtained from an adhesive tape is wrapped with a porous polytetrafluoroethylene (PTFE) sheet of an average pore size of 0.2 $\mu$m (as one example, NTF1122 manufactured by Nitto Denko Corporation), and tied with a kite string to give a measurement sample. The weight of the produced measurement sample is measured, and the weight is taken as weight C before immersion. The weight C before immersion is the total weight of the adhesive layer, the polytetrafluoroethylene sheet and the kite string. Separately, the total weight of the PTFE sheet and the kite string is measured and taken as weight B of the package. The measurement sample is then housed in a container with 50 mL inner volume filled with toluene, and left standing at 23°C for 7 days. The inside of the container is washed with ethyl acetate together with the measurement sample, the measurement sample is removed from the container, transferred to an aluminum cup, and dried at 130°C for 2 hr to remove ethyl acetate. The weight of the measurement sample after removal of ethyl acetate therefrom is measured, and the weight is taken as weight A after immersion. The gel fraction can be determined by the following formula:

$$\text{gel fraction (wt\%)}=(A-B)/(C-B)\times100$$

The silicone adhesive composition can be produced, for example, by mixing a peroxide curable silicone resin, an organic peroxide curing agent, and an addition reaction curing silicone rubber. The order of mixing of each component is not limited. At the time of mixing, the above-described additives and the like may be added as necessary. When the silicone resin is composed of a plurality of substances, a silicone resin may be formed from the substances and then mixed with other components. Alternatively, the substances themselves may be mixed with other components without forming a silicone resin to produce a silicone adhesive composition.

(Rubber adhesive)

Rubber adhesive is based on a rubber polymer and includes those based on a natural rubber (NR), those based on a modified natural rubber, and those based on a synthetic rubber. As the modified natural rubber, one in which not less than 50% by weight (e.g., not less than 60 wt%) of the modified natural rubber is a structural part derived from the natural rubber can be preferably employed. Examples of the modified natural rubber include graft modified natural rubber in which other monomer is grafted on natural rubber and the like. As the monomer to be grafted on the natural rubber, acrylic monomer, styrene and the like can be mentioned. For example, an acrylic modified natural rubber in which not less than 50% by weight of the above-mentioned monomer to be grafted is acrylic monomer (monomer having acryloyl group or methacryloyl group) can be preferably employed. Examples of the acrylic monomer to be grafted on the natural rubber in the acrylic modified natural rubber include (meth)acrylic acid; alkyl(meth)acrylates in which the alkyl group has 1 - 16 carbon atoms such as methyl(meth)acrylate, ethyl(meth)acrylate, isopropyl(meth)acrylate, t-butyl(meth)acrylate and the like. Preferred are methylmethacrylate (MMA), ethylmethacrylate, isopropylmethacrylate, t-butylmethacrylate and the like. One or more kinds of the acrylic monomers can be used.

Specific examples of the synthetic rubber include polybutadiene, polyisoprene, butyl rubber, polyisobutylene, styrenebutadienerubber (SBR), styrene-butadiene-styrene block copolymer (SBS), styrene-ethylenebutylene-styrene block copolymer (SEBS), styrene-isoprene-styrene block copolymer (SIS) and the like.

In preferable one embodiment of the rubber adhesive, the base polymer is a natural rubber. For example, a natural rubber with a Mooney viscosity of about 10 - 60 under the measurement conditions of MS (1+4) 100°C (using L type rotor, preheating 1 min, viscosity measurement time 4 min, test temperature 100°C) is preferable.

In preferable other embodiment, the base polymer is an acrylic modified natural rubber (NR-MMA graft copolymer) formed by grafting MMA to natural rubber. Such graft copolymer can be produced by a conventional method, or a commercially available product can be easily obtained. The graft ratio of MMA in NR-MMA graft copolymer (expressed by mass of MMA bound to natural rubber/mass of natural rubber used for grafting x 100 (%), and generally equivalent to the value calculated from the mass ratio of natural rubber and MMA used for producng NR-MMA graft copolymer) can be, for example, 1% - 120%, typically 5% - 100%, preferably 10% - 90% (e.g., 30% - 80%). The above-mentioned graft ratio may be 50% - 90% (e.g., 60% - 80%).

The rubber adhesive may be a composition in which a base polymer is blended with other polymer (hereinafter to be also referred to as a secondary polymer). Such secondary polymer may be, for example, acrylic polymer, polyester polymer, polyurethane polymer, silicone polymer and the like which can be a base polymer such as known acrylic adhesive, polyester adhesive, polyurethane adhesive, silicone adhesive and the like. Alternatively, it may be other than the base polymer among the rubber polymers recited above. The secondary polymer may be used singly or two or more kinds thereof may also be used.

Such secondary polymer is used in an amount of not more than 100 parts by weight per 100 parts by weight of the base polymer (the total amount when two or more kinds of secondary polymers are used). Generally, the amount of the secondary polymer to be used is appropriately not more than 70 parts by weight, preferably not more than 50 parts by weight, per 100 parts by weight of the base polymer.

The rubber adhesive can contain a tackifier. Examples of the tackifier include terpene tackifier, terpenephenol tackifier, rosin tackifier, styrene tackifier, and the like, petroleum resin (C5, C9, etc.), ketone resin, and the like, which are recited as examples in the aforementioned acrylic adhesive. Examples of the petroleum resin include aliphatic petroleum resin, aromatic petroleum resin, copolymerized petroleum resin, alicyclic petroleum resin, hydrides of these and the like. Examples of the ketone resin include ketone resin by condensation of ketones and formaldehyde. One or more kinds of tackifiers can be used. The tackifier may be preferably used, for example, in embodiments where the base polymer is a natural rubber or a modified natural rubber. Preferable examples of the tackifier include rosin tackifier, aliphatic (C5) petroleum resin, and terpene tackifier. These tackifier resins may be preferably used, for example, in embodiments where the base polymer is a natural rubber or a modified natural rubber. The amount of the tackifier to be used is generally suitably about 20 - 150 parts by weight (preferably about 30 - 100 parts by weight) per 100 parts by weight of the polymer components.

The rubber adhesive can contain a known vulcanization accelerator. Examples of such vulcanization accelerator include zinc oxide, dithiocarbamic acids (sodium dimethyldithiocarbamate, sodium diethyldithiocarbamate, zinc dimethyldithiocarbamate, zinc diethyldithiocarbamate etc.), thiazoles (2-mercaptobenzothiazole, dibenzothiazyl disulfide etc.), guanidines (diphenylguanidine, di-o-tolylguanidine etc.), sulfenamides (benzothiazyl-2-diethylsulfenamide, N-cyclohexyl-2-benzothiazylsulfenamide etc.), thiurams (tetramethylthiuram monosulfide, tetramethylthiuram disulfide and the like), xanthogenic acids (sodium isopropyl xanthate, zinc isopropyl xanthate etc.), aldehyde ammonias (acetaldehyde ammonia, hexamentylene tetramine etc.), aldehydeamines (n-butylaldehydeaniline, butylaldehydemonobutylamine etc.), thioureas (diethylthiourea, trimethyl thiourea etc.) and the like. One or more kinds of the vulcanization accelerators can be appropriately selected and used. The amount of the vulcanization accelerator to be used is generally appropriately 0.1 - 10 parts by weight (e.g., 0.5 - 5 parts by weight), per 100 parts by weight of the polymer components.

The rubber adhesive can contain a known crosslinking agent as necessary. As such crosslinking agent, isocyanate compound, sulfur, sulfur-containing compound, phenol resin, organic metal compound and the like can be used and, for example, isocyanate compound can be preferably employed. Specific examples of the isocyanate compound include those recited as examples in the aforementioned acrylic adhesive. The amount of the isocyanate compound to be used is preferably 0.3 - 10 parts by weight (e.g., 0.5 - 5 parts by weight), per 100 parts by weight of the polymer components.

The rubber adhesive can contain any additive as necessary. Examples of the additive include softening agent, flame-retardant, antistatic agent, colorant (pigment, dye etc.), light stabilizer (radical scavenger, ultraviolet absorber etc.), antioxidant and the like.

The first adhesive layer can be formed by, for example, applying a solution or dispersion in which the aforementioned adhesive is dissolved or dispersed in an organic liquid medium or an aqueous liquid medium in a layer on one side of a support, and heating same to dry and remove the organic liquid medium or the aqueous liquid medium. As the application method, various methods are used. Specifically, for example, roll coat, kiss roll coat, gravure coat, reverse coat, roll brush, spray coat, dip roll coat, bar coat, knife coat, air knife coat, curtain coat, lip coat, an extrusion coat method by die coater and the like can be mentioned. The temperature of drying by heating is preferably 40°C - 200°C, further preferably 50°C - 180°C, particularly preferably 70°C - 170°C. By setting the heating temperature to fall within the above-mentioned range, an adhesive layer having superior adhesive property can be obtained. As the drying time, an appropriate time may be adopted as appropriate. The above-mentioned drying time is preferably 5 sec - 20 min, further preferably 5 sec - 10 min, particularly preferably 10 sec - 5 min.

The thickness of the first adhesive layer 2 is appropriately determined according to the kind of the adhesive, the material of the wall surface and the like. To obtain an adhesive force sufficient to hold a wall decoration material such as wallpaper and the like, not less than 5 $\mu$m is preferable, and not less than 20 $\mu$m is more preferable. In view of the removability of the adhesive member from the wall surface, not more than 200 $\mu$m is preferable, and not more than 100 $\mu$m is more preferable.

The adhesive force of the first adhesive layer 2 preferably shows a 180° peel adhesive force to SUS of not more than 20 N/20 mm, more preferably not more than 15 N/20 mm, furthermore preferably not more than 1.2 N/20 mm, particularly preferably not more than 10 N/20 mm. When the 180° peel adhesive force to SUS of the first adhesive layer 2 is not more than 20 N/20 mm, the pressure bonding adhesive member shows good release property from a wall surface even when the wall surface is made of various materials. Therefore, for example, it acts more favorably on the suppression of damage to the wall surface (for example, underlying wallpaper) when peeling the pressure bonding adhesive member off from the wall surface (for example, underlying wallpaper) to repaste the wall decoration material (e.g., wallpaper) again. When the 180° peel adhesive force to SUS is less than 0.1N/20 mm, since the adhesive force to the wall surface (e.g., underlying wallpaper) is too low, the pressure bonding adhesive member is not maintained stably on the wall surface (e.g., underlying wallpaper), and the wall decoration material (e.g., wallpaper) may be detached from the wall surface (e.g., underlying wallpaper) over time. Therefore, the 180° peel adhesive force to SUS is preferably not less than 0.lN/20 mm, more preferably not less than 1N/20 mm, still more preferably not less than 2N/20 mm.

Although not shown in Fig. 1, the adhesive member 10 of the present invention is preferably protected by a release liner until actual use. Examples of the constituting material of the release liner include plastic films such as polyethylene, polypropylene, polyethylene terephthalate, polyester film and the like, porous materials such as paper, cloth, non-woven fabric and the like, net, foam sheet, metal foil, appropriate thin film such as a laminate of these and the like. A plastic film is preferably used since it is superior in the surface smoothness. The plastic film is not particularly limited as long as it can protect the first adhesive layer and, for example, polyethylene film, polypropylene film, polybutene film, polybutadiene film, polymethylpentene film, polyvinyl chloride film, vinyl chloride copolymer film, polyethylene terephthalate film, polybutylene terephthalate film, polyurethane film, ethylene-vinyl acetate copolymer film and the like can be mentioned.

The thickness of the aforementioned release liner is generally 5 - 200 $\mu$m, preferably about 5 - 100 $\mu$m. The aforementioned release liner can also be subjected to a treatment as necessary, such as release treatment and antifouling treatment with silicone, fluorine, long chain alkyl or fatty acid amide release agent, silica powder and the like, antistatic treatment of coating type, kneading type, evaporation type and the like. Particularly, by appropriately performing a release treatment such as silicone treatment, long-chain alkyl treatment, fluorine treatment, and the like on the surface of the release liner, the release property from the first adhesive layer 2 can be enhanced more.

As shown in Fig. 1, the second adhesive layer 3 of the adhesive member 10 of the present invention is also preferably protected by a release liner 4 until actual use. The release liner 4 that protects the second adhesive layer 3 is described in detail below.

[Second adhesive layer]

The second adhesive layer 3 in the pressure bonding adhesive member of the present invention is an adhesive layer for adhesion of a wall decoration material (that is, wall decoration material is adhered to the second adhesive layer 3), and includes a body layer 3A and plural convex parts 3B formed on a surface of the body layer 3A.

<Body layer>

The body layer 3A is an adhesive layer for securing a sufficient adhesive force to a wall decoration material, and various pressure-sensitive adhesives such as rubber adhesive, acrylic adhesive, polyamide adhesive, silicone adhesive, polyester adhesive, ethylene-vinyl acetate copolymer adhesive, polyurethane adhesive and the like can be applied similar to the first adhesive layer 2. One or more kinds selected from the group consisting of rubber adhesive, acrylic adhesive and silicone adhesive is/are preferable. Of these, acrylic adhesive containing an acrylic polymer as a base polymer can be used preferably since a desired property can be expressed by selecting the kind and the like of the monomer unit constituting the base polymer (acrylic polymer).

The acrylic adhesive generally contains, as a base polymer, an acrylic polymer containing (meth)acrylic acid alkyl ester as the main monomer unit.

Examples of the (meth)acrylic acid alkyl ester include (meth) acrylic acid $C_{1-20}$ alkylesters such as methyl(meth)acrylate, ethyl(meth)acrylate, propyl(meth)acrylate, n-butyl(meth)acrylate, isobutyl(meth)acrylate, sec-butyl(meth)acrylate, t-butyl(meth)acrylate, hexyl (meth)acrylate, 2-ethylhexyl(meth)acrylate, cyclohexyl(meth)acrylate, t-butylcyclohexyl(meth)acrylate, isoamyl(meth)acrylate, n-pentyl(meth)acrylate, isopentyl(meth)acrylate, cyclopentyl(meth)acrylate, n-octyl(meth)acrylate, isooctyl (meth)acrylate, cyclooctyl(meth)acrylate, n-nonyl(meth)acrylate, isononyl (meth)acrylate, n-decyl(meth)acrylate, isodecyl(meth)acrylate, n-dodecyl(meth)acrylate, undecyl(meth)acrylate, isoundecyl (meth)acrylate, isomyristyl(meth)acrylate, n-tridecyl(meth)acrylate, n-tetradecyl(meth)acrylate, n-pentadecyl(meth)acrylate, n-octadecyl(meth)acrylate, n-nonadecyl (meth)acrylate, n-eicosyl (meth)acrylate and the like. Among these, (meth) acrylic acid $C_{1-12}$ alkylester is preferable, and (meth)acrylic acid $C_{1-8}$ alkylester is more preferable. One or more kinds of (meth)acrylic acid alkyl esters can be selected and used.

The content of (meth)acrylic acid alkyl ester in the whole monomer unit constituting the acrylic polymer is preferably 50 - 99.9 wt%, more preferably 70 - 99 wt%. When it is less than 50 wt%, a sufficient adhesive force may not be obtained.

The acrylic polymer can contain other monomer unit copolymerizable with (meth)acrylic acid alkyl ester with the aim to improve cohesive force, heat resistance, crosslinking property and the like. Examples of such monomer unit include carboxy group-containing monomers such as acrylic acid, methacrylic acid, carboxyethyl(meth)acrylate, carboxypentyl(meth)acrylate, itaconic acid, maleic acid, fumaric acid, crotonic acid and the like; hydroxy group-containing monomers such as 2-hydroxyethyl(meth)acrylate, 2-hydroxypropyl (meth) acrylate, 4-hydroxybutyl (meth) acrylate, 2-hydroxyhexyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methylacrylate, N-methylol(meth)acryl amide, N-hydroxy(meth)acryl amide, vinyl alcohol, allyl alcohol, 2-hydroxyethylvinylether, 4-hydroxybutylvinylether, diethylene glycol monovinylether, (4-hydroxymethylcyclohexyl)methyl methacrylate and the like; sulfo group-containing monomers such as styrene sulfonic acid, allyl sulfonic acid, 2-(meth)acrylamido-2-methylpropanesulfonic acid, (meth)acrylamidopropanesulfonic acid, sulfopropyl (meth) acrylate, (meth)acryloyloxynaphthalenesulfonic acid and the like; phosphate group-containing monomers such as 2-hydroxyethylacryloyl phosphate and the like; (N-substituted)amide monomers such as (meth)acrylamide, N,N-dimethyl(meth)acrylamide, N-butyl(meth)acrylamide, N-methylol(meth)acrylamide, N-methylolpropane(meth)acrylamide and the like; amino (meth) acrylic acid alkyl ester monomers such as aminoethyl (meth)acrylate, N,N-dimethylaminoethyl (meth)acrylate, t-butylaminoethyl (meth)acrylate and the like; alkoxy(meth)acrylic acid alkyl ester monomers; maleimide monomers such as N-cyclohexylmaleimide, N-isopropylmaleimide, N-laurylmaleimide, N-phenylmaleimide and the like; itaconimide monomers such as N-methylitaconimide, N-ethylitaconimide, N-butylitaconimide, N-octylitaconimide, N-2-ethylhexylitaconimide, N-cyclohexylitaconimide, N-laurylitaconimide and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide and the like; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, N-vinylcaprolactam and the like; cyanoacrylic ester monomers such as acrylonitrile, methacrylonitrile and the like; epoxy group-containing acrylic monomers such as glycidyl (meth)acrylate and the like; glycol acrylic ester monomers such as polypropylene glycol (meth)acrylate, methoxyethylglycol (meth)acrylate, methoxypolypropylene glycol (meth)acrylate and the like; acrylic ester monomers having a heterocycle, a halogen atom, a silicon atom or the like such as tetrahydrofurfuryl (meth)acrylate, fluorine (meth)acrylate, silicone (meth)acrylate and the like; multifunctional monomers such as hexanediol di(meth)acrylate, (poly)ethylene glycol di(meth)acrylate, polypropylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate, hexyl di(meth)acrylate and the like; olefin monomers such as isoprene, dibutadiene, isobutylene and the like; vinyl ether monomers such as vinyl ether and the like, and the like. Among these, a carboxy group-containing monomer or a hydroxy group-containing monomer is preferable.

One or more kinds of these other monomer units can be used.

The acrylic copolymer can be produced by subjecting the aforementioned (meth)acrylic acid alkyl ester alone, or (meth)acrylic acid alkyl ester and other monomer to be a monomer unit to polymerization by a known appropriate method. For example, various radical polymerizations such as solution polymerization, bulk polymerization, emulsion polymerization and the like, and the like are preferable. The acrylic copolymer may be any of random copolymer, block copolymer, graft copolymer and the like, and random copolymer is preferable. The polymerization initiator, chain transfer agent, emulsifier and the like used for radical polymerization are not particularly limited and can be appropriately selected and used. The weight average molecular weight of the acrylic copolymer can be controlled by the amounts of the polymerization initiator and chain transfer agent to be used and reaction conditions.

Examples of the polymerization initiator include, but are not limited to, azo-based initiators such as 2,2'-azobisisobutyronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropionamidine)disulfate, 2,2'-azobis(N,N'-dimethyleneisobutylamidine), 2,2'-azobis [N-(2-carboxyethyl)-2-methylpropionamidine]hydrate (e.g., "VA-057" manufactured by Wako Pure Chemical Industries, Ltd.) and the like; persulfates such as potassium persulfate and ammonium persulfate and the like; peroxide-based initiators such as di (2-ethylhexyl)peroxydicarbonate, di(4-t-butylcyclohexyl)peroxydicarbonate, di-sec-butylperoxydicarbonate, t-butyloxyneodecanoate, t-hexylperoxypivalate, t-butylperoxypivalate, dilauroylperoxide, di-n-octanoylperoxide, 1,1,3,3-tetramethylbutylperoxy-2-ethylhexanoate, di(4-methylbenzoyl)peroxide, dibenzoylperoxide, t-butylperoxyisobutyrate, 1,1-di(t-hexylperoxy)cyclohexane, t-butylhydroperoxide, hydrogen peroxide and the like; and redox initiators combining a peroxide and a reducing agent such as a combination of persulfate and sodium bisulfite, a combination of peroxide and sodium ascorbate and the like.

The polymerization initiator may be used singly or in a mixture of two or more kinds thereof. The total content is preferably about 0.005 - 1 part by weight, more preferably about 0.02 - 0.5 parts by weight, per 100 parts by weight of the monomer.

Examples of the chain transfer agent include lauryl mercaptan, glycidyl mercaptan, mercaptoacetic acid, 2-mercaptoethanol, thioglycolic acid, thioglycolic acid 2-ethylhexyl, 2,3-di mercapto-1-propanol and the like. The chain transfer agent may be used singly or in a mixture of two or more kinds thereof. The amount of use is about 0.1 parts by weight per 100 parts by weight of the total amount of the monomer.

Examples of the emulsifier to be used for emulsion polymerization include anionic emulsifiers such as sodium lauryl sulfate, lauryl ammonium sulfate, sodium dodecylbenzenesulfonate, polyoxyethylene alkyl etherammonium sulfate, sodium polyoxyethylene alkyl ether sulfate, polyoxyethylenealkylphenylether sodium sulfate and the like; nonionic emulsifiers such as polyoxyethylene alkyl ether, polyoxyethylenealkylphenylether, polyoxyethylene fatty acid ester, polyoxyethylene-polyoxypropylene block polymer and the like; and the like. These emulsifiers may be used singly or two or more kinds thereof may be used in combination. The amount of the emulsifier to be used is 0.3 - 5 parts by weight and, in view of polymerization stability and mechanical stability, more preferably 0.5 - 1 part by weight, per 100 parts by weight of the total amount of the monomer.

The adhesive can contain a crosslinking agent in addition to a base polymer. Examples of the crosslinking agent include polyvalent isocyanurate, polyfunctional isocyanate compound, polyfunctional melamine compound, polyfunctional epoxy compound, polyfunctional oxazoline compound, polyfunctional aziridine compound, metal chelate compound and the like. Particularly, from the aspects of broad utility, polyvalent isocyanurate or polyfunctional isocyanate compound is preferably used. One or more kinds of these can be used in combination.

Examples of the aforementioned polyvalent isocyanurate include polyisocyanurate form of hexamethylenediisocyanate and the like. Use of these is effective since the objects of obtaining the transparency of the obtained adhesive layer and a high gel fraction can be achieved. The aforementioned polyvalent isocyanurate used may be a commercially available product and, specifically, trade name "DURANATE TPA-100" (manufactured by Asahi Kasei Chemicals Corporation), trade name "CORONATE HK", "CORONATE HX", "CORONATE 2096" (manufactured by Nippon Polyurethane Industry Co., Ltd.) and the like can be mentioned.

The afore mentioned polyfunctional isocyanate compound is not particularly limited as long as it is a compound having at least two or more, more preferably not less than 3, isocyanate groups in a molecule. Specifically, aliphatic polyisocyanates, alicyclic polyisocyanates, aromatic polyisocyanates and the like can be mentioned.

Examples of the aforementioned aliphatic polyisocyanates include 1,2-ethylenediisocyanate, tetramethylenediisocyanate such as 1,2-tetramethylenediisocyanate, 1,3-tetramethylenediisocyanate, 1,4-tetramethylenediisocyanate and the like, hexamethylenediisocyanates such as 1,2-hexamethylenediisocyanate, 1,3-hexamethylenediisocyanate, 1,4-hexamethylenediisocyanate, 1,5-hexamethylenediisocyanate, 1,6-hexamethylenediisocyanate, 2,5-hexamethylenediisocyanate and the like, 2-methyl-1,5-pentanediisocyanate, 3-methyl-1,5-pentanediisocyanate, lysinediisocyanate and the like.

Examples of the aforementioned alicyclicpolyisocyanates include isophoronediisocyanate, cyclohexyldiisocyanates such as 1,2-cyclohexyldiisocyanate, 1,3-cyclohexyldiisocyanate, 1,4-cyclohexyldiisocyanate and the like, cyclopentyldiisocyanates such as 1,2-cyclopentyldiisocyanate, 1,3-cyclopentyldiisocyanate and the like, hydrogenated xylylene diisocyanate, hydrogenated tolylene diisocyanate, hydrogenated diphenylmethanediisocyanate, hydrogenated tetramethylxylenediisocyanate, 4,4'-dicyclohexylmethanediisocyanate and the like.

Examples of the aforementioned aromatic polyisocyanates include 2,4-tolylene diisocyanate, 2,6-tolylene diisocyanate, 4,4'-diphenylmethanediisocyanate, 2,4'-diphenylmethanediisocyanate, 2,2'-diphenylmethanediisocyanate, 4,4'-diphenyletherdiisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropanediisocyanate, m-phenylenediisocyanate, p-phenylenediisocyanate, naphthylene-1,4-diisocyanate, naphthylene-1,5-diisocyanate, 3,3'-dimethoxydiphenyl-4,4'-diisocyanate, xylylene-1,4-diisocyanate, xylylene-1,3-diisocyanate and the like.

As the aforementioned polyfunctional isocyanate compound, dimer and trimer of aromatic aliphatic polyisocyanates can be used besides the aforementioned aliphatic polyisocyanates, alicyclic polyisocyanates, aromatic polyisocyanates. Specifically, dimer and trimer of diphenylmethanediisocyanate, reaction product of trimethylolpropane and tolylene diisocyanate, reaction product of trimethylolpropane and hexamethylenediisocyanate, polymerized substance such as polymethylenepolyphenylisocyanate, polyetherpolyisocyanate, polyester polyisocyanate and the like, and the like can be mentioned.

The aforementioned polyfunctional isocyanate compound used may be a commercially available product. Specifically, trade name "CORONATE L" (manufactured by Nippon Polyurethane Industry Co., Ltd.) as a trimer adduct of trimethylolpropane and tolylene diisocyanate, trade name "CORONATE HL" (manufactured by Nippon Polyurethane Industry Co., Ltd.) as a trimer adduct of trimethylolpropane and hexamethylenediisocyanate, and the like can be mentioned.

As the aforementioned polyfunctional melamine compound, methylated methylolmelamine, butylated hexamethylolmelamine and the like can be mentioned.. As the aforementioned polyfunctional epoxy compound, diglycidyl aniline, glyceroldiglycidyl ether and the like can be mentioned.

The kind and the amount of the aforementioned crosslinking agent are not particularly limited. It is preferable to determine them such that the formed adhesive layer has a gel fraction of preferably about 30 - 98 wt%, more preferably about 35 - 95 wt%. When it is less than 30 wt%, sufficient retaining force (cohesive property) tends to be not achieved with ease and when it exceeds 98 wt%, crosslinking density becomes high and high adhesive force (adhesive force) tends to be not achieved with ease.

The adhesive can contain a tackifier besides the base polymer. The tackifier is not particularly limited as long as it is solid at ordinary temperature. Examples thereof include terpene tackifier, terpene phenol tackifier, rosin tackifier, styrene tackifier (e.g., styrene resin, poly ($\alpha$-methylstyrene) and the like) and the like, and rosin tackifier is preferable. Examples of the rosin tackifier include modified rosin (disproportionated rosin and polymerized rosin, and other chemically-modified rosin etc.) obtained by modifying unmodified rosin (natural rosin) such as gum rosin, wood rosin, tall oil rosin and the like by disproportionation, polymerization and the like, various rosin derivatives and the like. Examples of the rosin derivative include rosin esters such as rosin ester obtained by esterifying unmodified rosin with alcohols, modified rosin ester obtained by esterifying modified rosin such as hydrogenated rosin, disproportionated rosin, polymerized rosin or the like with alcohols, and the like; unsaturated fatty acid-modified rosins obtained by modifying unmodified rosin or modified rosin (hydrogenated rosin, disproportionated rosin, polymerized rosin etc.) with unsaturated fatty acid; unsaturated fatty acid-modified rosin esters obtained by modifying rosin ester with an unsaturated fatty acid; rosin alcohols obtained by reduction-treating a carboxyl group in unmodified rosin, modified rosin (hydrogenated rosin, disproportionated rosin, polymerized rosin etc.), unsaturated fatty acid-modified rosins or unsaturated fatty acid-modified rosin esters; metal salts of rosins (particularly, rosin esters) such as unmodified rosin, modified rosin, various rosin derivatives and the like; and the like. In addition, as the rosin derivative, a rosin phenol resin obtained by adding phenol to rosins (unmodified rosin, modified rosin, various rosin derivatives etc.) with an acid catalyst and subjecting same to thermal polymerization and the like can also be used. Examples of the alcohols to be used for obtaining the above-mentioned rosin esters include divalent alcohols such as ethylene glycol, diethylene glycol, propylene glycol, neopentyl glycol and the like, trivalent alcohols such as glycerol, trimethylolethane, trimethylolpropane and the like, tetravalent alcohols such as pentaerythritol, diglycerol and the like, hexavalent alcohols such as dipentaerythritol etc. and the like.

As the rosin tackifier, modified rosin ester is preferable, and polymerized rosin ester (polymerized rosin esterified with alcohols) is particularly preferable.

As a tackifier, a commercially available product can be used. For example, examples of the polymerized rosin ester include SUPER ESTER E-650 [manufactured by Arakawa Chemical Industries, Ltd.], SUPER ESTER E--788 [manufactured by Arakawa Chemical Industries, Ltd.], SUPER ESTER E-786-60 [manufactured by Arakawa Chemical Industries, Ltd.], SUPER ESTER E-865 [manufactured by Arakawa Chemical Industries, Ltd.], SUPER ESTER E-865NT [manufactured by Arakawa Chemical Industries, Ltd.], HARIESTER SK-508 [manufactured by Harima Chemicals, Inc.], HARIESTER SK-508H [manufactured by Harima Chemicals, Inc.], HARIESTER SK-816E [manufactured by Harima Chemicals, Inc.], HARIESTER SK-822E [manufactured by Harima Chemicals, Inc.], HARIESTER SK-323NS [manufactured by Harima Chemicals, Inc.] and the like.

In addition, when what is called a "water dispersion type acrylic adhesive", which is a dispersion liquid in which an acrylic copolymer produced by emulsion polymerization is dispersed as an dispersoid in an aqueous medium after emulsion polymerization, is used as the acrylic copolymer, an emulsion type tackifier (that is, dispersion in which tackifier (resin component) is dispersed as a dispersoid in an aqueous medium) can be used preferably. The emulsion type tackifier is preferably an emulsion type rosin tackifier.

From the aspect of adhesion to a wall decoration material, particularly wallpaper, a tackifier having a softening temperature of not less than 80°C is preferable, a tackifier having a softening temperature of not less than 90°C is more preferable, a tackifier having a softening temperature of not less than 100°C is still more preferable, a tackifier having a softening temperature of not less than 110°C is particularly preferable, and a tackifier having a softening temperature of not less than 120°C is most preferable. From the aspect of prevention of a decrease in the initial adhesive force, a tackifier having a softening temperature of not more than 160°C is preferable, and a tackifier having a softening temperature of not more than 150°C is more preferable. The softening temperature as used herein refers to a ring and ball softening temperature Ts measured according to JIS K 2207 ring and ball softening point (temperature) test method and using a constant-load extrusion type capillary rheometer (SHIMADZU flow tester CFT-500D) and a value measured under the conditions of die: 1 mm x 1 mm, load: 4.9N, temperature rising rate: 5°C/min.

The amount of the tackifier to be used is not particularly limited, and is preferably 1 - 50 parts by weight, more preferably 5 - 30 parts by weight, per 100 parts by weight of the base polymer of the adhesive. When the blending amount is less than 5 parts by weight, a sufficient adhesive force-improving effect may not be expected and when it exceeds 50 parts by weight, the initial adhesive force tends to decrease.

The adhesive may contain, in addition to a crosslinking agent and a tackifier, additives such as stabilizer, filler, colorant, ultraviolet absorber, antioxidant and the like as a component other than the base polymer.

The body layer 3A can be formed by, for example, applying a solution or dispersion in which the aforementioned adhesive is dissolved or dispersed in an organic liquid medium or an aqueous liquid medium in a layer on one side of a support, and heating same to dry and remove the organic liquid medium or the aqueous liquid medium. As the application method, various methods are used. Specifically, for example, roll coat, kiss roll coat, gravure coat, reverse coat, roll brush, spray coat, dip roll coat, bar coat, knife coat, air knife coat, curtain coat, lip coat, an extrusion coat method by die coater and the like can be mentioned. The temperature of drying by heating is preferably 40°C - 200°C, further preferably 50°C - 180°C, particularly preferably 70°C - 170°C. By setting the heating temperature to fall within the above-mentioned range, an adhesive layer having superior adhesive property can be obtained. As the drying time, an appropriate time may be adopted as appropriate. The above-mentioned drying time is preferably 5 sec - 20 min, further preferably 5 sec - 10 min, particularly preferably 10 sec - 5 min.

The thickness of the body layer 3A is appropriately determined according to the kind of the adhesive, the material of the wall decoration material, protrusion height of the convex part 3B and the like. Generally, it is preferably not less than 5 $\mu$m, more preferably not less than 20 $\mu$m, further preferably 30 $\mu$m. When the thickness is less than 5 $\mu$m, the convex part 3B is less likely to be pushed into the body layer 3A when the wall decoration material is adhered to the second adhesive layer by pressurization, and a sufficient adhesive force to the wall decoration material tends to be difficult to obtain.

<Convex part 3B>

The plural convex parts 3B formed on the surface of the body layer 3A are provided to keep the wall decoration material not in contact with the body layer 3A until a sufficient pressure is applied to the wall decoration material. They are formed from a low-viscosity adhesive which does not express high adhesive force by merely contacting the wall decoration material. Therefore, the wall decoration material can be moved on the second adhesive layer 3 and the position of the wall decoration material can be adjusted.

As such low viscosity adhesive, any low viscosity adhesive can be used without particular limitation as long as a convex part formed therefrom is not immediately deformed by merely contacting a wall decoration material and does not express a high adhesive force. From the aspect of superior low friction of the formed convex part, an aggregate of acrylic copolymer particles is preferable. The "aggregate of acrylic copolymer particles" is a solidification product obtained by coagulation and solidification of acrylic copolymer particles obtained by applying a "water dispersion type acrylic adhesive" to a surface of the body layer 3A and drying by heating.

An emulsion type tackifier may be added to the "water dispersion type acrylic adhesive" as necessary. When an emulsion type tackifier is added, no particular limitation exists, and terpene-based tackifier, terpenephenol-based tackifier, rosin-based tackifier, styrene-based tackifier, and the like can be mentioned, with preference given to rosin-based tackifier. The amount of the tackifier to be used (solid content) is not particularly limited, and about 5 - 50 parts by weight per 100 parts by weight of acrylic copolymer particles is preferable. Using a water-dispersion type acrylic adhesive to which an emulsion-type tackifier is added, the aggregate of the acrylic copolymer particles contains a tackifier (aggregate composition compatible with tackifier).

The "water dispersion type acrylic adhesive" can be applied to a surface of the body layer 3A by, for example, a method of dropping using a dispenser, a method of transferring a formed pattern onto the surface of the main body layer 3A with a gravure roll engraved with the formed pattern, or other general printing techniques such as screen printing, offset printing, flexographic printing and the like.

In the aggregate of the acrylic copolymer particles constituting the convex part 3B, the acrylic copolymer particle is preferably a copolymer containing at least (meth)acrylic acid alkyl ester as a monomer unit. The (meth)acrylic acid alkyl ester is preferably $C_{1-18}$ (meth) acrylic acid alkyl ester having a linear, branched chain or cyclic alkyl group having 1 - 18 carbon atoms. Examples thereof include methyl (meth)acrylate, ethyl (meth)acrylate, propyl (meth)acrylate, isopropyl (meth)acrylate, n-butyl (meth)acrylate, isobutyl (meth) acrylate, s-butyl (meth) acrylate, t-butyl (meth) acrylate, pentyl (meth)acrylate, isopentyl (meth)acrylate, hexyl (meth)acrylate, heptyl (meth)acrylate, octyl (meth)acrylate, cyclohexyl (meth) acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth) acrylate. Of these, $C_{1-12}$ (meth) acrylic acid alkyl ester is preferable, and $C_{1-10}$ (meth)acrylic acid alkyl ester is more preferable. One or more kinds of (meth)acrylic acid alkyl esters can be used.

The acrylic copolymer particles can contain, as a monomer unit besides (meth)acrylic acid alkyl ester, carboxy group-containing monomers such as acrylic acid, methacrylic acid, carboxyethyl acrylate, carboxypentyl acrylate, itaconic acid, maleic acid, fumaric acid, crotonic acid and the like, and/or hydroxy group-containing monomers such as hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth) acrylate, (4-hydroxymethylcyclohexyl)methyl methacrylate and the like. As the carboxy group-containing monomer, acrylic acid and methacrylic acid are preferable, and as the hydroxy group-containing monomer, hydroxyethyl acrylate and hydroxybutyl acrylate are preferable. One or more kinds each of the carboxy group-containing monomers and hydroxy group-containing monomers can be used.

The acrylic copolymer particle is preferably a copolymer containing (meth)acrylic acid alkyl ester and carboxyl group-containing monomer as monomer unit.

The acrylic copolymer particle is preferably a core-shell acrylic copolymer particle 20 having a core 21 and a shell 22 having elastic modulus higher than that of the core 21 shown in Fig. 5. When the elastic modulus of shell 22 is higher than the elastic modulus of core 21, low friction of the convex part 3B is improved, frictional force of the pressure bonding adhesive member 10 on the wall surface becomes smaller, and the positional-adjustment function of the pressure bonding adhesive member 10 is improved more.

In core-shell acrylic copolymer particles 20, it is preferable that core 21 is constituted of polymer (A1) containing acrylic acid alkyl ester as the main monomer unit and shell 22 is constituted of polymer (A2) containing alkyl methacrylate and carboxy group-containing monomer as the main monomer units.

The acrylic acid alkyl ester in polymer (A1) is preferably $C_{6-10}$ acrylic acid alkyl ester, more preferably 2-ethylhexyl acrylate, isononyl acrylate or hexyl acrylate. In addition, polymer (A1) can contain a carboxy group-containing monomer as a monomer unit, and the carboxy group-containing monomer is preferably acrylic acid or methacrylic acid, more preferably acrylic acid.

Polymer (A1) preferably contains 60 - 100 wt%, more preferably 70 - 100 wt%, further preferably 80 - 100 wt%, particularly preferably 80 - 100 wt% of acrylic acid alkyl ester unit in the total monomer units. As the specific examples of polymer (A1) having preferable composition, for example, a copolymer of acrylic acid alkyl ester (80 - 98 wt%)/carboxy group-containing monomer (2 - 20 wt%) can be mentioned.

On the other hand, the alkyl methacrylate in polymer (A2) is preferably $C_{1-18}$ alkyl methacrylate, more preferably, methyl methacrylate, ethyl methacrylate, or cyclohexyl methacrylate. The carboxy group-containing monomer is preferably acrylic acid. In addition, polymer (A2) preferably contains 60 - 100 wt%, more preferably 70 - 99.9 wt%, further preferably 80 - 99 wt%, particularly preferably 80 - 98 wt% of alkyl methacrylate unit in the total monomer units. As a specific example of polymer (A2) having preferable composition, for example, a copolymer of alkyl methacrylate (80 - 99 wt%)/carboxy group-containing monomer (1 - 20 wt%) can be mentioned.

In the core-shell acrylic copolymer particles 20, a core-shell ratio which is a weight ratio (core/shell) of core 21 and shell 22 is preferably 10 - 90/90 - 10, more preferably 10 - 80/90 - 20. When the core-shell ratio exceeds such preferable range and the ratio of the core is higher (ratio of shell is smaller), the positional-adjustment function of the pressure bonding adhesive member tends to decrease. When the ratio of core is smaller (ratio of shell is higher), the pressure adhesiveness of the pressure bonding adhesive member tends to decrease.

In the present invention, the "water dispersion type acrylic adhesive" to be the source of the aggregate of the (meth)acrylic copolymer particles constituting the convex part 3B can be obtained by a conventional method, emulsion polymerization. That is, it is obtained by blending a monomer to be the monomer unit of the aforementioned acrylic copolymer particles and emulsifier (surfactant), radical polymerization initiator, chain transfer agent as necessary and the like as appropriate and performing emulsion polymerization by, for example, a known emulsion polymerization method such as collectively adding method (collectively polymerizing method), monomer-dropping method, monomer emulsion-dropping method or the like. In the monomer-dropping method, continuous dropping or divisional dropping is selected as appropriate. Known emulsion polymerization methods can be combined as appropriate. The reaction conditions and the like are appropriately selected. The polymerization temperature is preferably, for example, about 40 - 95°C and the polymerization time is preferably about 30 min - 24 hr.

For the water dispersion type acrylic adhesive in which core-shell acrylic copolymer particles are dispersed, multistep emulsion polymerization is performed which includes emulsion polymerization to form a polymer to be the core of the core-shell acrylic copolymer particles, and emulsion polymerization to produce a polymer to be the shell which is performed in the presence of the produced polymer to be the core. Each emulsion polymerization can be performed according to a conventional method, and the aforementioned method and conditions can be adopted.

As the above-mentioned emulsifier, for example, various unreactive surfactants generally used for emulsion polymerization are used. Examples of the unreactive surfactant include anionic unreactive surfactant and nonionic unreactive surfactant. Specific examples of the anionic unreactive surfactant include higher fatty acid salts such as sodium oleate and the like; alkylaryl sulfonates such as sodium dodecylbenzenesulfonate and the like; alkyl sulfate salts such as sodium lauryl sulfate, ammonium lauryl sulfate and the like; polyoxyethylene alkyl ether sulfate salts such as sodium polyoxyethylene lauryl ether sulfate and the like; polyoxyethylene alkylaryl ether sulfate salts such as sodium polyoxyethylene nonylphenyl ether sulfate and the like; alkyl sulfosuccinate salts and a derivative thereof such as sodium monooctyl sulfosuccinate, sodium dioctyl sulfosuccinate, sodium polyoxyethylene lauryl sulfosuccinate and the like; polyoxyethylene distyrenated phenyl ether sulfate salts and the like. Specific examples of the nonionic unreactive surfactant include polyoxyethylene alkyl ethers such as polyoxyethylene lauryl ether, polyoxyethylene stearyl ether and the like; polyoxyethylene alkylphenyl ethers such as polyoxyethylene octylphenyl ether, polyoxyethylene nonylphenyl ether and the like; sorbitan higher fatty acid esters such as sorbitan monolaurate, sorbitan monostearate, sorbitan trioleate and the like; polyoxyethylene sorbitan higher fatty acid esters such as polyoxyethylene sorbitan monolaurate and the like; polyoxyethylene higher fatty acid esters such as polyoxyethylene monolaurate, polyoxyethylene monostearate and the like; glycerol higher fatty acid esters such as oleic acid monoglyceride, stearic acid monoglyceride and the like; polyoxyethylene-polyoxypropylene-block copolymer, polyoxyethylene distyrenated phenyl ether and the like.

In addition to the above-mentioned unreactive surfactants, reactive surfactants having an ethylenic unsaturated double bond (a radical polymerizable functional group) can be used as the surfactant. Examples of the reactive surfactant include anionic reactive surfactants in which radical polymerizable functional groups such as propenyl group, allyl ether group and the like are introduced into the aforementioned anionic unreactive surfactants, nonionic reactive surfactants in which radical polymerizable functional groups such as propenyl group, allyl ether group and the like are introduced into the aforementioned nonionic unreactive surfactants, and the like.

The reactive surfactant used may be a commercially available product. Specific examples of the anionic reactive surfactant include, alkyl ethers (examples of the commercially available product include AQUALON KH-05, KH-10, KH-20 manufactured by DKS Co. Ltd., ADEKA REASOAP SR-10N, SR-20N manufactured by ADEKA CORPORATION, LATEMUL PD-104 manufactured by Kao Corporation, etc.); sulfosuccinates (examples of the commercially available product include LATEMUL S-120, S-120A, S-180P, S-180A manufactured by Kao Corporation, ELEMINOL JS-20 manufactured by Sanyo Chemical Industries, Ltd., etc.); alkylphenyl ethers or alkylphenyl esters (examples of the commercially available product include AQUALON H-2855A, H-3855B, H-3855C, H-3856, HS-05, HS-10, HS-20, HS-30, HS-1025, BC-05, BC-10, BC-20 manufactured by DKS Co. Ltd., ADEKA REASOAP SDX-222, SDX-223, SDX-232, SDX-233, SDX-259, SE-10N, SE-20N manufactured by ADEKA CORPORATION); (meth)acrylate sulfates (examples of the commercially available product include Antox MS-60, MS-2N manufactured by Nippon Nyukazai Co., Ltd., ELEMINOL RS-30 manufactured by Sanyo Chemical Industries, Ltd., etc.); phosphates (examples of the commercially available product include H-3330PL manufactured by DKS Co. Ltd., ADEKA REASOAP PP-70 manufactured by ADEKA CORPORATION, etc.). Examples of the nonionic reactive surfactant include alkyl ethers (examples of the commercially available product include ADEKA REASOAP ER-10, ER-20, ER-30, ER-40 manufactured by ADEKA CORPORATION, LATEMUL PD-420, PD-430, PD-450 manufactured by Kao Corporation, etc.); alkylphenyl ethers or alkylphenyl esters (examples of the commercially available product include AQUALON RN-10, RN-20, RN-30, RN-50 manufactured by DKS Co. Ltd., ADEKA REASOAP NE-10, NE-20, NE-30, NE-40 manufactured by ADEKA CORPORATION, etc.); (meth)acrylate sulfates (examples of the commercially available product include RMA-564, RMA-568, RMA-1114 manufactured by Nippon Nyukazai Co., Ltd., etc.).

The emulsifier is preferably a reactive surfactant, and an anionic reactive surfactant is more preferable.

One or more kinds of emulsifiers can be used.

The above-mentioned radical polymerization initiator is not particularly limited, and known radical polymerization initiators generally used for emulsion polymerization are used. Examples thereof include azo initiators such as 2,2'-azobisisobutyronitrile, 2,2'-azobis(2-methylpropionamidine) disulfate, 2,2'-azobis(2-methylpropionamidine)dihydrochloride, 2,2'-azobis(2-amidinopropane)dihydrochloride, 2,2'-azobis[2-(2-imidazolin-2-yl)propane] dihydrochloride and the like; persulfate initiators such as potassium persulfate, ammonium persulfate and the like; peroxide initiators such as benzoyl peroxide, t-butyl hydroperoxide, hydrogen peroxide and the like; substituted ethane initiators such as phenyl-substituted ethane and the like; carbonyl initiator such as aromatic carbonyl compound and the like, and the like. These polymerization initiators are used singly or in combination as appropriate. When emulsion polymerization is performed, a polymerization initiator is combined with a reducing agent to form a redox initiator when desired. As a result, promotion of emulsion polymerization rate and emulsion polymerization at a low temperature are facilitated. Examples of such reducing agent include reducing organic compounds such as ascorbic acid, erythorbic acid, tartaric acid, citric acid, glucose, metal salt such as formaldehyde sulfoxylate and the like, and the like; reducing inorganic compounds such as anthorium thiosulfate, sodium sulfite, sodium bisulfite, sodium metabisulfite and the like; ferrous chloride, rongalit, thiourea dioxide and the like.

The composition of the monomer emulsion in the emulsion polymerization for obtaining the "water dispersion type acrylic adhesive" is preferably a composition containing 0.1 - 10 parts by weight (preferably 1 - 5 parts by weight) of a surfactant and 30 - 80 parts by weight (preferably 40 - 70 parts by weight) of water per 100 parts by weight of monomer. As used herein, the amounts of "surfactant" and "water" are each a total of the amounts charged in the monomer emulsion to be dropped and the polymerization reaction container, when emulsion polymerization is a monomer emulsion-dropping method.

The cohesive force of the acrylic copolymer particles may be improved by adding additives such as epoxide crosslinking agent, silane coupling agent and the like to the monomer emulsion.

The particle size of the acrylic copolymer particles is preferably not less than 100 nm, more preferably not less than 120 nm, in the volume-based median diameter (D50) as measured by laser diffraction scattering method. When the median diameter (D50) is not less than 100 nm, positional-adjustment function and the pressure adhesiveness of the convex part 3B become superior. On the other hand, from the aspects of cohesiveness of the (meth)acrylic copolymer particles obtained by drying the (meth)acrylic copolymer emulsion when the median diameter (D50) is too large, the median diameter (D50) is preferably not more than 300 nm, more preferably not more than 200 nm.

The sol weight average molecular weight (Mw) of the acrylic copolymer particles is preferably more than $1.0 \times 10^4$, more preferably not less than $5.0 \times 10^4$. It is preferably not more than $1.0 \times 10^7$, more preferably not more than $5.0 \times 10^6$. When the sol weight average molecular weight (Mw) is not more than $1.0 \times 10^4$, convex part 3B having a sufficient elastic modulus tends to be difficult to form. When the sol weight average molecular weight (Mw) exceeds $1.0 \times 10^7$, elastic modulus of the convex part 3B to be formed becomes too high, the convex part tends to be hardly deformed during pressing, and sufficient adhesiveness tends to be hardly obtained.

The sol weight average molecular weight (Mw) refers to the weight average molecular weight (Mw) of the sol part in the acrylic copolymer particles, and can be measured by converting substances soluble in ethyl acetate of the acrylic polymer particles based on polystyrene by GPC (Gel Permeation Chromatography) method. To be specific, two columns of "TSKgel GMH-H(20)" are connected to "HPLC8020" manufactured by Tosoh Corporation and measurement is performed under the conditions of flow rate 0.5 ml/min in a tetrahydrofuran solvent.

The protrusion height of the convex part 3B from the surface of the body layer 3A in the second adhesive layer 3 is preferably not less than 1 $\mu$m, more preferably not less than 10 $\mu$m, particularly preferably not less than 20 $\mu$m, from the aspect of stability of the positional-adjustment function of the wall decoration material on the second adhesive layer 3. On the other hand, from the aspect of improvement of the adhesive force when the wall decoration material is pressurized with a sufficient pressure to be adhered to the second adhesive layer 3, it is preferably not more than 100 $\mu$m, more preferably not more than 80 $\mu$m. When the protrusion height of the convex part 3B exceeds 100 $\mu$m, it tends to be difficult for the wall decoration material to form a sufficient contact surface with the body layer 3A.

In the pressure bonding adhesive member 10 shown in Figs. 1 and 2, the plural convex parts 3B in the second adhesive layer 3 are provided stripe-like on the surface of the body layer 3A, though they are not limited thereto. The plural convex parts 3B may be formed in the same pattern on the whole surface of the body layer 3A, and may be dot-like, lattice mesh, net-like or the like. The "lattice mesh" and "net-like" are different in that the "lattice mesh" has a pattern of convex part in which the planar shape of the pore portion (the portion where the convex part is not present) is a square or a rectangle, and the "net-like" has a pattern of convex part in which the planar shape of the pore portion (the portion where the convex part is not present) is a shape other than square or rectangle. When the convex part is net-like, the shape of the pore portion (the portion where the convex part is not present) may be entirely the same or different for each pore portion, with preference given to the entirety being the same.

When the plural convex parts 3B have a stripe-like pattern, the width of the individual line part (convex part) is preferably 0.1 - 5 mm, more preferably 0.2 - 2 mm. The width of the space part (D in Fig. 2) between adjacent line parts (convex parts 3B) is preferably 0.1 - 5 mm, more preferably 0.2 - 4.5 mm. The plural line parts (convex parts 3B) preferably have the same width.

When the plural convex parts 3B have a dot-like pattern, the planar shape of each dot (convex part) may have various shapes such as triangle, rectangle (e.g., square, rectangle, diamond shape, trapozoid etc.), circular shape (e.g., true circle, circle close to true circle, ellipse etc.), oval, regular polygon (square etc.), star shape and the like, and the arrangement form of the dots is not particularly limited, and square matrix, zigzag pattern and the like are preferable. The flat plane area of the dot (convex part 12) is preferably 0.007 - 20 mm$^2$, more preferably 0.2 - 1.8 mm$^2$. The flat plane area of individual dots (convex part 3B) may be the same for all dots (convex part) or difficult for each dot (convex part). Preferably, all dots (convex part) have the same area. The pitch (distance between center points) between the adjacent dots (convex part) is preferably 0.1 - 5 mm, more preferably 0.2 - 2 mm.

The flat plane area, width and the like of the individual convex parts 3B refer to the maximum area of the convex part 3B and the maximum width of the convex part 3B when the second adhesive layer 3 is vertically viewed from above. In addition, the tip of the above-mentioned convex part 3B may be a flat surface or a non-flat surface.

The occupancy rate of the convex part 3B on the surface of the body layer 3A ([total area of convex part 3B/total area of surface of body layer 3A]x100(%)) is preferably 30 - 95%, more preferably 40 - 90%, from the aspects of the adhesiveness of the pressure bonding adhesive member 10 to a wall surface and the low friction property of the adhesive tape 1 (that is, easy mobility on the wall surface).

The adhesive force of the second adhesive layer 3 preferably shows a 180° peel adhesive force to SUS of not less than 2.1 N/20 mm, more preferably not less than 3 N/20 mm, furthermore preferably not less than 5 N/20 mm. When the 180° peel adhesive force to SUS of the second adhesive layer 3 is not less than 2.1 N/20 mm, generally, high adhesive force to various wall decoration materials is expressed and firm adhesion to various wall decoration materials can occur. On the other hand, when the adhesive force is too high, adjustment of the position tends to be difficult. Thus, the 180° peel adhesive force to SUS is preferably not more than 30 N/20 mm, more preferably not more than 20 N/20 mm, particularly preferably not more than 15 N/20 mm.

In the pressure bonding adhesive member 10 of the present invention, it is important that the adhesive force of the second adhesive layer 3 is higher than that of the first adhesive layer 2, and the 180° peel adhesive force to SUS of the second adhesive layer 3 is higher than that of the first adhesive layer and the difference between them is preferably not less than 2N/20 mm, more preferably not less than 3N/20 mm, furthermore preferably not less than 4N/20 mm. When the difference in the adhesive force is not less than 2N/20 mm, an adhesive residue of the first adhesive layer on the wall surface (e.g., underlying wallpaper) can be prevented when the pressure bonding adhesive member is detached from the wall surface (e.g., underlying wallpaper) to repaste a wall decoration material (e.g., wallpaper).

As shown in Fig. 1, the second adhesive layer 3 is preferably protected by the release liner 4 until the pressure bonding adhesive member 10 is actually used for pasting a wall decoration material.

The release liner 4 having a compressive elastic modulus of 1 MPa or below is used. That is, release liner 4 has cushioning property corresponding to a compressive elastic modulus of not more than 1 MPa. Thus, even when the release liner 4 is wound together with the sheet-like pressure bonding adhesive member 10 and stored as rolls and the pressure due to the winding tightening is applied to the pressure bonding adhesive member 10, the concentration of stress to the convex parts 3B is reduced. Therefore, crushing of the convex part 3B and embedding thereof in the body layer 3A to markedly decrease the protrusion height of the convex part 3B can be prevented. The compressive elastic modulus of the release liner 4 is more preferably not more than 0.7 MPa, particularly preferably not more than 0.5 MPa.

The release liner 4 is not particularly limited as regards material, form and the like as long as it has the above-mentioned compressive elastic modulus. It is preferably one wherein at least one surface of a film mainly composed of a porous film is subjected to a release treatment since the cushioning property can be obtained easily. As used herein, the "film mainly composed of a porous film" means a single substance of a porous film or a laminate film of a porous film and other film (layer).

Examples of the porous film include (1) paper, woven fabric, non-woven fabric (e.g., polyester (e.g., polyethylene terephthalate (PET) etc.) non-woven fabric etc.), (2) a film obtained by a mechanical perforation treatment of a solid film comprising, as a component, one or more kinds of resins selected from the group consisting of polyester (e.g., polyethylene terephthalate (PET) etc.), nylon, saran (trade name), polyvinyl chloride, polyethylene, polypropylene, ethylene-vinyl acetate copolymer, polytetrafluoroethylene, and ionomer, (3) foam film of polyolefin foam (e.g., foam comprising, as a component, noncrosslinked polyethylene foam, noncrosslinked polyethylene foam, polypropylene foam, polyethylene (PE) and polypropylene (PP) etc.), polyester foam (e.g., polyethylene terephthalate foam, etc.), urethane foam (e.g., soft urethane foam, hard urethane foam, urethane modified polyisocyanurate foam, polyisocyanurate foam etc.), or rubber foam, and the like. Of these, foam film is preferable, polyolefin foam film is more preferable, since sufficient cushioning property is obtained easily.

The porous film preferably has an apparent density measured according to JIS K 7222 (2005) of not more than 500 kg/m$^3$, preferably not more than 200 kg/m$^3$. When the porous film has such apparent density, (a) a release liner having a compressive elastic modulus of not more than 1 MPa is easily obtained.

The thickness of the porous film is preferably not less than 100 $\mu$m, more preferably not less than 500 $\mu$m, to disperse the stress applied on the convex part. In view of the thickness when it is wound in a roll (that is, to increase the amount of the pressure bonding adhesive member 10 to be wound), the thickness is preferably not more than 2000 $\mu$m, more preferably not more than 1500 $\mu$m.

When the porous film is a foam film, one having an average major axis of fine pores within the range of 10 - 1000 $\mu$m and an average minor axis within the range of 10 - 1000 $\mu$m is preferably used. The pore ratio of the foam film is preferably 50 - 99%, more preferably 60 - 98%, from the aspect of flexibility. As used herein, the "pore ratio" means an area ratio of the fine pores in the area of the film in the flat plane perpendicular to the thickness direction of the foamed film.

Examples of the other film (layer) 52 include metal or resin solid film, skin layer and the like. The "metal or resin solid film" means a metal or resin non-porous film free of a mechanical perforation treatment. A metal or resin film having fine pores inevitably developed in the production stage for forming a film of a metal or resin is encompassed in the "solid film". Examples of the resin solid film include a film formed from one or more kinds of resins selected from the group consisting of polyester (e.g., polyethylene terephthalate (PET), etc.; nylon; polyvinyl chloride; polyvinylidene chloride; polyolefins such as polyethylene (high density polyethylene etc.), polypropylene, reactor TPO, ethylene-vinyl acetate copolymer and the like; polytetrafluoroethylene and ionomer resin and the like. As a metal solid film, aluminum foil, copper foil, stainless foil and the like can be mentioned. Among these, a high density polyethylene film is preferable. The thickness of the metal or resin solid film is preferably 3 - 80 $\mu$m, more preferably 3 - 20 $\mu$m.

The "skin layer" is a porous thin layer having a pore ratio smaller than that of a porous film (foam film) and formed on a surface of the porous film (foam film). The "pore ratio" is an area ratio of fine pores in the area of the thin film in the flat plane perpendicular to the thickness direction of the porous film. The pore ratio of the skin layer is preferably not more than 10%, more preferably not more than 5%, from the aspects of maintenance of the cushioning property of the porous film (foam film) and stable formation of the release layer. The thickness of the skin layer is preferably 3 - 50 $\mu$m, more preferably 3 - 20 $\mu$m, from the aspects of maintenance of the cushioning property of the porous film (foam film) and stable formation of the release layer.

The skin layer is generally formed by melting a surface layer portion of the porous film (foam film). For example, a skin layer can be formed on the side of a surface to be in contact with a heating roll of the film by using a heating roll set to a temperature about 5 - 20°C lower than the melting point of the film and reducing the rotating speed of the heating roll to a level lower than the running speed of the film.

The release agent to be used for a release treatment is not particularly limited, and fluorine-based release agent, long chain acrylic acid alkyl ester-based release agent, silicone-based release agent and the like are used. Of these, a silicone-based release agent is preferable. As the curing method, a curing method such as UV irradiation, electron beam irradiation and the like are preferably used. Furthermore, of the silicone-based release agents, a cation polymerizable UV curable silicone-based release agent is preferable. A cation polymerizable UV curable silicone-based release agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curable silicone-based release agent wherein the onium salt photoinitiator is a boron photoinitiator, particularly good releaseability (mold releaseability) can be obtained. A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include γ-glycidyloxypropyl group, β-(3,4-epoxycyclohexyl)ethyl group, β-(4-methyl-3,4-epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd. can be mentioned.

As the silicone-based release agent, a thermosetting addition type silicone-based release agent (thermosetting addition type polysiloxane-based release agent) can also be used. The thermosetting addition type silicone-based release agent contains, as essential constituent components, polyorganosiloxane containing an alkenyl group as a functional group in a molecule (alkenyl group containing silicone) and polyorganosiloxane containing a hydrosilyl group as a functional group in a molecule.

As the above-mentioned polyorganosiloxane containing an alkenyl group as a functional group in a molecule, among others, polyorganosiloxane having two or more alkenyl groups in a molecule is preferable. Examples of the above-mentioned alkenyl group include vinyl group (ethenyl group), allyl group (2-propenyl group), butenyl group, pentenyl group, hexenyl group and the like. The above-mentioned alkenyl group is generally bonded to a silicon atom (e.g., terminal silicon atom, silicon atom in the main chain etc.) of polyorganosiloxane forming the main chain or skeleton.

Examples of the above-mentioned polyorganosiloxane forming the main chain or skeleton include polyalkylalkylsiloxane (polydialkylsiloxane) such as polydimethylsiloxane, polydiethylsiloxane, polymethylethylsiloxane and the like, polyalkylarylsiloxane, a copolymer using plural kinds of silicon atom-containing monomer components [e.g., poly(dimethylsiloxane-diethylsiloxane) etc.] and the like. Of these, polydimethylsiloxane is preferable. That is, as polyorganosiloxane containing an alkenyl group as a functional group in a molecule, specifically, polydimethylsiloxane having vinyl group, hexenyl group and the like as functional groups is preferably recited as an example.

The above-mentioned polyorganosiloxane crosslinking agent containing a hydrosilyl group as a functional group in a molecule is polyorganosiloxane having a hydrogen atom bonded to silicon atom (particularly, silicon atom having Si-H bond) in a molecule, and polyorganosiloxane having two or more silicon atoms having Si-H bond in a molecule is particularly preferable. The above-mentioned silicon atom having Si-H bond may be any of a silicon atom in the main chain and a silicon atom in the side chain. That is, it may be contained as a constituent unit of the main chain or may be contained as a constituent unit of the side chain. The number of the silicon atom having Si-H bond is not particularly limited as long as it is two or more. The above-mentioned polyorganosiloxane crosslinking agent containing a hydrosilyl group as a functional group in a molecule is specifically preferably polymethylhydrogensiloxane, poly (dimethylsiloxane-methylhydrogensiloxane) or the like.

The thermosetting silicone-based release treatment agent may contain, together with the aforementioned thermosetting silicone-based resin, a reaction inhibitor (reaction retardant) to impart preservation stability at room temperature. Specific examples of the reaction inhibitor include 3,5-dimethyl-1-hexyn-3-ol, 3-methyl-1-penten-3-ol, 3-methyl-3-penten-1-yne, 3,5-dimethyl-3-hexen-1-yne and the like when thermosetting addition type silicone-based release agent is used as a release agent.

The thermosetting silicone-based release treatment agent may further contain a release control agent and the like as necessary besides the above-mentioned components. Specifically, a release control agent such as MQ resin and the like, polyorganosiloxane free of alkenyl group or hydrosilyl group (trimethylsiloxy group terminated polydimethylsiloxane etc.) and the like may be added. The content of these components in the release treatment agent is not particularly limited, and 1 - 30 wt% of the whole solid content is preferable.

The thermosetting silicone-based release treatment agent generally contains a curing catalyst. As the curing catalyst, a platinum catalyst generally used as a catalyst for thermosetting addition type silicone is preferably used. Among others, at least one platinum catalyst selected from chloroplatinic acid, olefin complex of platinum and olefin complex of chloroplatinic acid is preferable. The curing catalyst can be used as it is or after dissolving or dispersing in a solvent.

The amount (solid content) of the curing catalyst is preferably 0.05 - 0.55 parts by weight, more preferably 0.06 - 0.50 parts by weight, per 100 parts by weight (resin content) of the thermosetting silicone-based resin. When the amount of the aforementioned curing catalyst is less than 0.05 parts by weight, the curing rate becomes slow, and when it exceeds 0.55 parts by weight, the pot life becomes markedly short.

A coating solution containing a release treatment agent used for forming a release treatment layer generally contains an organic solvent to improve coatability. The organic solvent is not particularly limited and, for example, aliphatic or alicyclic hydrocarbon solvents such as cyclohexane, hexane, heptane and the like; aromatic hydrocarbon solvents such as toluene, xylene and the like; ester solvents such as ethyl acetate, methyl acetate and the like; ketone solvents such as acetone, methylethyl ketone and the like; alcohol solvents such as methanol, ethanol, butanol and the like, and the like can be used. These organic solvents may be used singly or a mixture of two or more kinds thereof may be used.

The thickness of the release layer formed by a release treatment is preferably 0.001 - 10 $\mu$m, more preferably 0.03 - 5 $\mu$m, particularly preferably 0.1 - 1 $\mu$m, from the aspects of superior releasability (mold releasability) and suppression of uneven thickness (stable formation of release layer).

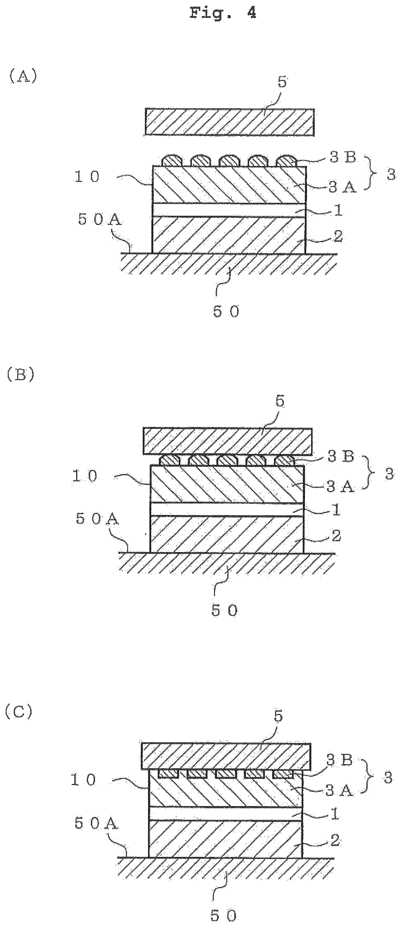

Fig. 4 schematically shows pasting, to a surface 50A of a wall 50, of wall decoration material 5 by using the pressure bonding adhesive member 10 of the present invention.

First, as shown in Fig. 4(A), the first adhesive layer 2 of the pressure bonding adhesive member 10 is adhered to the surface 50A of wall 50. As shown in Fig. 4(B), the wall decoration material 5 is placed on the second adhesive layer 3 of the pressure bonding adhesive member 10 (wall decoration material 5 is in contact with plural convex parts 3B), and the position of the wall decoration material 5 is adjusted on the second adhesive layer 3. Thereafter, the wall decoration material 5 is pressurized to adhere and fix the wall decoration material to the second adhesive layer 3 (Fig. 4(C)).

That is, when the wall decoration material 5 is placed on the second adhesive layer 3 (when wall decoration material 5 is in contact with plural convex parts 3B), the wall decoration material 5 is pressurized as it is to adhere and fix the wall decoration material to the second adhesive layer 3 when the position of the wall decoration material 5 on the surface 50A of wall 50 is an intended position. When the position of the wall decoration material 5 in contact with plural convex parts 3B on the surface 50A of wall 50 is not an intended position, the wall decoration material 5 is transversely moved as it is or the wall decoration material 5 is once moved away from the plural convex parts 3B of the second adhesive layer 3 and the position of the wall decoration material 5 on the surface 50A of wall 50 is adjusted to the intended position, after which the wall decoration material 5 is pressurized to adhere and fix the wall decoration material 5 to the second adhesive layer 3.

When, for example, the wall decoration material 5 is a wallpaper, the surface 50A of the wall 50 is an underlying wallpaper, and a new wallpaper is pasted on the underlying wallpaper.

The pressure bonding adhesive member of the present invention 10 can be particularly preferably used for pasting of a wallpaper. Examples of the wallpaper include vinyl cloth (polyvinyl chloride backed by paper or incombustible paper), cloth (textiles and knitted fabrics made of regenerated cellulose fiber, cotton, hemp, silk and the like, or nonwoven fabric backed by paper), fleece wallpaper (made by three-dimensional entanglement of pulp and chemical fibers such as polyester and the like), and the like.

[Examples]

While the present invention is described in more detail in the following by way of Examples and Comparative Examples, the scope of the present invention is not limited by the following Examples. In the following description, "parts" means "parts by weight" and "%" means "% by weight" unless otherwise indicated.

[Preparation of adhesive used for the first adhesive layer]

(Adhesive 1)

2-Ethylhexyl acrylate (2-EHA):100 parts, acrylic acid (AA):2 parts, trimethylolpropane triacrylate (TMPTA):0.01 parts were subjected to solution polymerization using benzoylperoxide (BPO):0.2 parts as a polymerization initiator in toluene for 6 hr to give an acrylic polymer (polymer concentration 80%). To the acrylic polymer:100 parts was added an isocyanate based crosslinking agent CORONATE L (manufactured by Nippon Polyurethane Industry Co., Ltd.):2 parts, and the mixture was uniformly mixed by stirring to give Adhesive 1.

EP 3 508 544 A1

(Adhesive II)

butylacrylate (BA):100 parts and AA:5 parts were subjected to solution polymerization using benzoylperoxide (BPO):0.2 parts as a polymerization initiator in toluene for 6 hr to give an acrylic polymer with weight average molecular weight:500000 (polymer concentration 70%). To the acrylic polymer:100 parts was added an isocyanate based crosslinking agent CORONATE L (manufactured by Nippon Polyurethane Industry Co., Ltd.):4.5 parts, and the mixture was uniformly mixed by stirring to give Adhesive II.

(Adhesive III)

6-Type rubber (natural rubber, first grade RSS):100 parts was dissolved in toluene:400 parts, and methyl methacrylate (MMA):75 parts, Nipah BW (manufactured by NOF Corporation, BPO) 0.3 parts and perroyl L (manufactured by NOF Corporation, dilauroyl peroxide):0.5 parts were added, and solution polymerization was carried out for 6 hr to allow for grafting of MMA polymer to 6-type rubber. To the 6 type rubber grafted with the MMA polymer:50 parts were added raw rubber (after kneading 4 times): 50 parts, terpene tackifier (terpene hydrocarbon resin (PENYS resin PX1150 manufactured by Yashara Chemical Co., Ltd., softening temperature: 115±5°C):100 parts, and ZnO as a vulcanization accelerator:30 parts, and the mixture was uniformly mixed by stirring to give Adhesive III.

(Adhesive IV)

Crosslinking agent BY24-741 (manufactured by Toray Dow Corning Co., Ltd.):0.1 parts and catalyst SRX212 (manufactured by Toray Dow Corning Co., Ltd.):1.0 part were added to toluene relative to 100 parts of SD4592PSA (manufactured by Toray Dow Corning Co., Ltd.), which is a silicone polymer containing polydimethylsiloxane as a main skeleton, and the mixture was uniformly mixed by stirring to prepare Adhesive IV.

(Adhesive V)

In a reaction container provided with a cooling tube, a nitrogen inlet tube, a thermometer and an agitator, BA:5 parts, 2-EHA:92 parts, acrylonitrile (AN):2 parts, MAA:1 part, V50 (manufactured by Wako Pure Chemical Industries, Ltd., azo based initiator, 2,2'-azobis(2-methylpropionamidine)dihydro chloride):0.03 parts, ammonium persulfate (APS) as initiator:0.3 parts were added to water (100 parts) added with Emal AD-25R as emulsifier (manufactured by Kao Corporation, lauryl ammonium sulfate emulsifier):3 parts to perform emulsion polymerization, and pH of the mixture was adjusted to 8 by adding 10 wt% ammonia water. TETRAD C (epoxide-based crosslinking agent manufactured by Mitsubishi Gas Chemical Co., Ltd.):0.6 parts was added relative to the solid content (100 parts) of the obtained polymer and the mixture was uniformly mixed by stirring to prepare Adhesive V.

(Adhesive VI)

In a reaction container provided with a cooling tube, a nitrogen inlet tube, a thermometer and an agitator, BA:100 parts, AA:5 parts, APS (initiator):1.5 parts and thioglycolic acid (chain transfer agent):0.1 parts were added to water 100 parts added with HITENOL N-17 (manufactured by Dai-ichi Kogyo Seiyaku Co., Ltd., polyoxyethylene aryl ether sulfate):3 parts to perform emulsion polymerization, and pH of the mixture was adjusted to 8 by adding 10 wt% ammonia water. Softener composed of a copolymer having a molecular weight of 50,000, copolymer weight ratio (BA:AA)=100:5: 50 parts, TEPIC-G (manufactured by Nissan Chemical Industry Co., Ltd., triazine ring-containing epoxy compound):1.5 parts was added relative to the solid content (100 parts) of the obtained polymer and the mixture was uniformly mixed by stirring to prepare Adhesive VI.

[Preparation of adhesive used for the second adhesive layer]

[Adhesive for body layer]

(Adhesive 1)

BA:70 parts, AA:2 parts, 2-EHA:30 parts, and 4-hydroxybutyl(meth)acrylate (4-HBA):0.1 parts were subjected to solution polymerization using azobisisobutyronitrile (AIBN):0.08 parts as a polymerization initiator in toluene for 6 hr to give an acrylic polymer with a weight average molecular weight of 500,000. To the acrylic polymer: 100 parts were added a rosin ester tackifier (trade name "Pensel D125" manufactured by Arakawa Chemical Industries, Ltd., softening point: 125°C) :30 parts and isocyanate based crosslinking agent CORONATE L (trimethylolpropane/tolylene diisocyanate

23

trimeric adduct, manufactured by Nippon Polyurethane Industry Co., Ltd.):2 parts, and the mixture was uniformly mixed by stirring to give Adhesive 1.

(Adhesive 2)

In a reaction container provided with a cooling tube, a nitrogen inlet tube, a thermometer and an agitator, BA:85 parts, methylacrylate (MA):13 parts, AA:1 part, methacrylic acid (MAA):1 part, KBM-503 (silane coupling agent, trade name "KBM-503", 3-methacryloxypropyltrimethoxysilane manufactured by Shin-Etsu Chemical Co., Ltd.):0.05 parts, VA-057 (azo based initiator manufactured by Wako Pure Chemical Industries, Ltd., 2,2'-azobis[N-(2-carboxyethyl)-2-methylpropionamidine]n hydrate):0.1 parts, and dodecanethiol (chain transfer agent) (0.05 parts) were added to water 100 parts added with LATEMUL E-118B (emulsifier manufactured by Kao Corporation, sodium polyoxyethylene alkyl ether sulfate) (3 parts) to perform emulsion polymerization, and pH of the mixture was adjusted to 8 by adding 10 wt% ammonia water. SUPER ESTER E-865-NT (manufactured by Arakawa Chemical Industries, Ltd., aqueous emulsion type rosin ester tackifier) (10 parts) was added relative to the solid content (100 parts) of the polymer in the dispersion obtained after emulsion polymerization and the mixture was uniformly mixed by stirring to prepare Adhesive 2.

(Adhesive 3)

In a reaction container provided with a cooling tube, a nitrogen inlet tube, a thermometer and an agitator, BA:100 parts, AA:5 parts, ammonium persulfate (APS) (initiator):1.5 parts and thioglycolic acid (chain transfer agent):0.1 parts were added to water 100 parts added with HITENOL N-17 (manufactured by Dai-ichi Kogyo Seiyaku Co., Ltd., polyoxyethylene aryl ether sulfate):3 parts to perform emulsion polymerization, and pH of the mixture was adjusted to 8 by adding 10 wt% ammonia water. Softener composed of a copolymer having a molecular weight of 50,000, copolymer weight ratio (BA:AA)=100:5: 50 parts, TEPIC-G (manufactured by Nissan Chemical Industry Co., Ltd., triazine ring-containing epoxy compound):1.5 parts was added relative to the solid content (100 parts) of the polymer in the dispersion obtained after emulsion polymerization and the mixture was uniformly mixed by stirring to prepare Adhesive 3.

(Adhesive 4)

In a reaction container provided with a cooling tube, a nitrogen inlet tube, a thermometer and an agitator, BA:5 parts, 2-EHA:92 parts, AN:2 parts, MAA:1 part, V50 (azo based initiator manufactured by Wako Pure Chemical Industries, Ltd., 2,2-,azobis(2-methylpropionamidine)dihydro chloride):0.03 parts, ammonium persulfate (APS) (initiator):0.3 parts were added to water (100 parts) added with Emal AD-25R (emulsifier manufactured by Kao Corporation, lauryl ammonium sulfate) (3 parts) to perform, emulsion polymerization, and pH of the mixture was adjusted to 8 by adding 10 wt% ammonia water. TETRAD C (epoxide-based crosslinking agent manufactured by Mitsubishi Gas Chemical. Co., Ltd., 1,3-bis (N,N-diglycidyl aminomethyl)cyclohexane) (0.6 parts) was added relative to the solid content (100 parts) of the polymer in the dispersion obtained after emulsion polymerization and the mixture was uniformly mixed by stirring to prepare Adhesive 4.

[Adhesive for convex part]

(Monomer emulsion A)

A mixture of 2-EHA (100 parts), a reactive surfactant AQUALON HS-1025 (manufactured by DKS Co. Ltd.) (1.5 parts), and ion exchange water (82 parts) was produced in a container as a starting material, and the mixture was stirred using a homomixer under a nitrogen atmosphere at 6000 rpm for 5 min to prepare monomer emulsion A.

(Monomer emulsion B)

A mixture of MMA (80 parts), BA (10 parts), AA (5 parts), MAA (5 parts), a reactive surfactant AQUALON HS-1025 (manufactured by DKS Co. Ltd.) (1.5 parts), and ion exchange water (82 parts) was produced in a container as a starting material, and the mixture was stirred using a homomixer under a nitrogen atmosphere at 6000 rpm for 5 min to prepare monomer emulsion B.

(Water dispersion type acrylic adhesive)

In a reaction container provided with a cooling tube, a nitrogen inlet tube, a thermometer, dropping facility, and stirring blades were placed a reactive surfactant AQUALON HS-1025 (manufactured by DKS Co. Ltd.) (0.5 parts) and ion exchange water (76.8 parts) and, after sufficient purging with nitrogen while stirring, the reaction mixture was heated to 60°C. After confirming that the reaction mixture became constant at 60°C, a water-soluble azopolymerization initiator VA-57 (manufactured by Wako Pure Chemical Industries, Ltd.) (0.05 parts) was added and, 10 min later, monomer emulsion (A) (150.6 parts) was added dropwise over 2 hr and half to give a copolymer to be the core layer. Then, VA-57 (0.05 parts) was further added and, 10 min later, monomer emulsion (B) (37.6 parts) was added dropwise over 45 min to form a copolymer to be the shell layer, whereby a water dispersion type acrylic adhesive containing core-shell type acrylic copolymer particles as a dispersoid was produced. The core-shell type acrylic copolymer particles had a sol weight average molecular weight of 200,000. The volume standard median diameter (D50) of the core-shell type acrylic copolymer particles as measured by the laser diffraction scattering method was 160 nm. Then, a polymerized rosin ester tackifier ("SUPER ESTER E-865-NT" manufactured by Arakawa Chemical Industries, Ltd.) (10 parts, solid content) was added per 100 parts of the core-shell structured acrylic copolymer particles (solid content) in the thus-obtained water dispersion type acrylic adhesive to give a final adhesive (Adhesive A).

[Example 1]

(Manufacture of double-faced adhesive base sheet)

Adhesive I was applied to one surface of a release liner and dried at 120°C for 2 min to form an adhesive layer with a thickness of about 70 μm. This release liner with an adhesive layer was laminated on one surface of a non-woven fabric substrate (trade name "AH-23 processed paper", manufactured by NIPPON PAPER PAPYLIA CO. LTD., thickness: 49 μm) to form a first adhesive layer on one surface of the non-woven fabric substrate. Then, Adhesive 1 was directly applied to the other surface of the above-mentioned substrate such that the total thickness of the sheet after drying was 160 μm, and dried at 120°C for 2 min to form a body layer (thickness: 1.60 μm) for the second adhesive layer. A second sheet of release liner was laminated on the body layer for the second adhesive layer. The thus-obtained laminate was stored in an oven at 50°C for 24 hr to give a double-faced adhesive base sheet.

<Formation of convex part>

The second sheet of release liner was peeled off from the double-faced adhesive base sheet after storage, Adhesive A was applied to the body layer for the second adhesive layer by a die coater with comb-shaped shim to form a stripe (convex part) with a line width of 0.5 mm and a pitch of 2.6 mm, and dried at 100°C for 2 min, whereby the second adhesive layer with a stripe-like convex part (height 30 μm) was formed on the body layer. Thereafter, a release liner with cushioning properties (with compressive elastic modulus of 1 MPa or less) was laminated on the second adhesive layer, whereby a pressure bonding adhesive member provided with a release liner on both surfaces was obtained.

[Example 2 - Example 6, Comparative Examples 1 - 4]

In the same manner as in Example 1 except that the adhesive used for the first adhesive layer and the second adhesive layer was changed as shown in Table 1, pressure bonding adhesive members were produced. In Comparative Examples 2 - 4, the convex part of the second adhesive layer was not formed, and a pressure bonding adhesive member in which the second adhesive layer consisted only of the body layer was produced.
The pressure bonding adhesive members of Examples 1 - 6 and Comparative Examples 1 - 4 were subjected to the following property evaluation and an evaluation test of a wallpaper pasting operation (application workability).

<Adhesive force 1 (adhesive force to SUS)>

(1) One of the release liners (release liner on second adhesive layer side) was detached from a pressure bonding adhesive member, and the exposed adhesive face was adhered to a 25 μm-thick polyethylene terephthalate film (trade name "Lumirror 25S10", manufactured by Panac Co., Ltd.) to give a test piece. The test piece was cut in 20 mm in width, the other release liner (release liner on the first adhesive layer side) was detached, and the exposed adhesive face was adhered to SUS304 plate to give a test piece. The 180° peel adhesive force (N/20 mm) of the first adhesive layer to the SUS plate was measured. Pressing at the time of bonding was performed by one reciprocation of a 2-kg roller, and one day after adhesion at room temperature, 180° peel adhesive force was measured by a tensile compression tester (device name "TG-1kN", manufactured by Minebea Co., Ltd.) under the following conditions.
tension (peeling) speed: 300 mm/min

measurement condition: temperature: 23±2°C, humidity: 65±5%RH

(2) The 180° peel adhesive force (N/20 mm) of the second adhesive layer to the SUS plate was measured by reversing the operations for the first adhesive layer and the second adhesive layer from those in the above (1).

<Adhesive force 2 (adhesive force to wallpaper)>

(1) One of the release liners (release liner on second adhesive layer side) was detached from a pressure bonding adhesive member, and the exposed adhesive face was adhered to a 25 μm-thick polyethylene terephthalate film (trade name "Lumirror 25S10", manufactured by Panac Co., Ltd.) to give a test piece. The test piece was cut in 20 mm in width, the other release liner (release liner on the first adhesive layer side) was detached, and the exposed adhesive face was adhered to polypropylene plate with a vinyl chloride wallpaper fixed thereon to give a test piece. The 180° peel adhesive force (N/20 mm) of the first adhesive layer to the vinyl chloride wallpaper backside was measured. Pressing at the time of bonding was performed by one reciprocation of a 2-kg roller, and one day after adhesion at room temperature, 180° peel adhesive force was measured by a tensile compression tester (device name "TG-1kN", manufactured by Minebea Co., Ltd.) under the following conditions. The vinyl chloride wallpaper used was vinyl chloride wallpaper SP-2344 manufactured by Sangetsu Corporation.
tension (peeling) speed: 300 mm/min
measurement condition: temperature: 23±2°C, humidity: 65±5%RH

(2) The 180° peel adhesive force (N/20 mm) of the second adhesive layer to fleece wallpaper was measured by reversing the operations for the first adhesive layer and the second adhesive layer from those in the above (1). The fleece wallpaper used was ISAK/Isaac fleece wallpaper (Tingleby Wallpaper, number: Red & amp; Blue) manufactured by Sandra Isaksson, UK.

<Re-peelability>

As a wallpaper to be newly pasted, ISAK/Isaac fleece wallpaper (non-woven) (Tingleby Wallpaper, number: Red & amp; Blue) manufactured by Sandra Isaksson, UK was used.
As an underlying wallpaper, vinyl chloride wallpaper SP-2344 manufactured by Sangetsu Corporation was used.
The first adhesive layer of the pressure bonding adhesive member was adhered, by pressurization by one reciprocation of a 2 kg roller, to a polypropylene (PP) plate with a vinyl chloride wallpaper fixed thereon. Thereafter, the release liner of the second adhesive layer was peeled off and a fleece wallpaper cut into width 20 mm, length 90 mm was adhered by pressurization from the top by one reciprocation of a 2 kg roller.
After standing at 60°C for 1 week, 180° peel adhesive force was measured by a tensile compression tester (device name "TG-1kN", manufactured by Minebea Co., Ltd.) by holding fleece wallpaper under the following conditions.
tension (peeling) speed: 300 mm/min
measurement condition: temperature: 23±2°C, humidity: 65±5%RH
underlayer damage: evaluated as good (○) when no destruction of underlying wallpaper (vinyl chloride wallpaper) and no adhesive residue was confirmed by visual observation and finger touch, and evaluated as poor (x) when destruction or adhesive residue was found.
release surface: evaluated as good (○) when peeling surface is interface between underlying wallpaper (vinyl chloride wallpaper) and the first adhesive layer, evaluated as poor (x) when peeling surface is interface between fleece wallpaper and the second adhesive layer, and evaluated as *nakiwakare* (not so good) (Δ) when peeling surfaces are both interface between underlying wallpaper (vinyl chloride wallpaper) and the first adhesive layer and interface between the second adhesive layer and fleece wallpaper.

<Application appearance>

A pressure bonding adhesive member was cut into a tape of width 45 mm, length 1000 mm. A fleece wallpaper was cut into a rectangle of width 530 mm, length 1000 mm. A tape-like pressure bonding adhesive member was pasted in a frame shape on a vinyl chloride wallpaper as an underlying wallpaper (adhesion of second adhesive layer) such that the tape-shaped pressure bonding adhesive member is provided along the edges of the four sides of the fleece wallpaper. The release liner covering the first adhesive layer was peeled off, the fleece wallpaper cut into a rectangle was adhered onto the first adhesive layer with hand and a squeegee, and the appearance of the fleece wallpaper was evaluated by visual observation.
Evaluated as bad (x) when any one of wrinkles, air bites and tears is recognized, and evaluated as good (○) when none of wrinkles, air bites and tears is recognized.

[Table 1]

| | | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 |
|---|---|---|---|---|---|---|---|---|---|---|---|---|
| pressure bonding adhesive member | second adhesive layer (vs new wallpaper) | body layer / convex part | Adhesive 1 | Adhesive 1 | Adhesive 1 | Adhesive 1 | Adhesive 2 | Adhesive 1 | Adhesive 2 | Adhesive 3 | Adhesive 4 | Adhesive 3 |
| | support | | Adhesive A | Adhesive A | Adhesive A | Adhesive A | Adhesive A | Adhesive A | Adhesive A | - | - | - |
| | support | | non-woven fabric | non-woven fabric | non-woven fabric | non-woven fabric | non-woven fabric | non-woven fabric | non-woven fabric | non-woven fabric | non-woven fabric | non-woven fabric |
| | first adhesive layer (vs underlying wallpaper) | | Adhesive I | Adhesive II | Adhesive III | Adhesive IV | Adhesive V | Adhesive V | Adhesive VI | Adhesive VI | Adhesive V | Adhesive V |
| adhesive force (N/20 mm) to wallpaper | second adhesive layer | | 8.75 | 7 | 7 | 7 | 8.75 | 7 | 7.8 | 9.125 | 2.4 | 12 |
| adhesive force difference (N/20 mm) | the first adhesive layer | | 6.5 | 4 | 1.2 | 0.85 | 0.71 | 4.25 | 12.6 | 12.6 | 2.7 | 2.7 |
| | second adhesive layer - the first adhesive layer | | 2.25 | 3 | 5.8 | 6.15 | 8.04 | 2.75 | x | x | x | 9.3 |
| adhesive force (N/20 mm) to SUS | second adhesive layer | | 8.13 | 13.7 | 13.7 | 13.7 | 8.13 | 13.7 | 8.13 | 10.7 | 3.6 | 12 |
| | first adhesive layer | | 6 | 8.2 | 8.3 | 10 | 3.6 | 3.6 | 10.7 | 10.7 | 3.6 | 3.6 |
| difference in adhesive force (N/20 mm) | second adhesive layer - first adhesive layer | | 2.13 | 5.5 | 5.4 | 3.7 | 4.53 | 10.1 | -2.57 | 0 | 0 | 8.4 |
| removability | underlayer damage | | ○ | ○ | ○ | ○ | ○ | ○ | x | x | ○ | ○ |
| | release surface | | ○ | ○ | ○ | ○ | ○ | ○ | x | x | △ | ○ |
| application appearance | | | ○ | ○ | ○ | ○ | ○ | ○ | ○ | ○ | ○ | x |

27

[Explanation of Symbols]

| | |
|---|---|
| 1 | support |
| 2 | first adhesive layer |
| 3 | second adhesive layer |
| 3A | body layer |
| 3B | convex part |
| 4 | release liner |
| 5 | wall decoration material |
| 10 | pressure bonding adhesive member |
| 50 | wall |
| 50A | wall surface |

This application is based on a patent application No. 2016-173044 filed in Japan, the contents of which are incorporated in full herein.

**Claims**

1. A pressure bonding adhesive member comprising
a support,
a first adhesive layer formed on one surface of the support, and
a second adhesive layer formed on the other surface of the support,
wherein the second adhesive layer comprises a body layer and plural convex parts formed on a surface of the body layer, and
the second adhesive layer has an adhesive force higher than that of the first adhesive layer.

2. The pressure bonding adhesive member according to claim 1, wherein the second adhesive layer has a 180° peel adhesive force to SUS which is higher than that of the first adhesive layer and the difference therein is not less than 2N/20 mm.

3. The pressure bonding adhesive member according to claim 1 or 2, wherein the first adhesive layer has a 180° peel adhesive force to SUS of not more than 20N/20 mm.

4. The pressure bonding adhesive member according to any one of claims 1 to 3, wherein the first adhesive layer comprises one or more kinds selected from the group consisting of a rubber adhesive, an acrylic adhesive and a silicone adhesive, and the second adhesive layer has a body layer comprising one or more kinds selected from the group consisting of a rubber adhesive, an acrylic adhesive and a silicone adhesive.

5. The pressure bonding adhesive member according to any one of claims 1 to 4, wherein the plural convex parts of the second adhesive layer are each formed from an aggregate of acrylic copolymer particles.

6. The pressure bonding adhesive member according to claim 5, wherein the acrylic copolymer particle is an acrylic core-shell type copolymer particle.

7. The pressure bonding adhesive member according to any one of claims 1 to 6, comprising a first release liner protecting the first adhesive layer and a second release liner protecting the second adhesive layer.

8. The pressure bonding adhesive member according to any one of claims 1 to 7, wherein the pressure bonding adhesive member is used for pasting a wall decoration material to a wall, the first adhesive layer is used for adhesion to a wall surface, and the second adhesive layer is used for adhesion to the wall decoration material.

9. A method for pasting a wall decoration material to a wall, comprising adhering the first adhesive layer of the pressure bonding adhesive member according to any one of claims 1 to 8 to a wall surface, bringing the wall decoration material into contact with plural convex parts of the second adhesive layer of the pressure bonding adhesive member, pressurizing the wall decoration material as it is to adhere and fix the wall decoration material to the second adhesive layer when the position of the wall decoration material on the wall surface is an intended position, or, when the position of the wall decoration material on the wall surface is not an intended position, transversely moving the wall decoration material as it is or once moving the wall decoration material away from the plural convex parts of the second adhesive layer and adjusting the position of the wall decoration material on the wall surface to the intended position, after which pressurizing the wall decoration material to adhere and fix the wall decoration material to the second adhesive layer.

Fig. 1

Fig. 2

Fig. 3

Fig. 4

(A)

(B)

(C)

## INTERNATIONAL SEARCH REPORT

| International application No. |
| --- |
| PCT/JP2017/031986 |

A. CLASSIFICATION OF SUBJECT MATTER
*C09J7/02*(2006.01)i, *C09J5/00*(2006.01)i, *C09J121/00*(2006.01)i, *C09J133/04*
(2006.01)i, *C09J183/04*(2006.01)i, *E04F13/07*(2006.01)i

According to International Patent Classification (IPC) or to both national classification and IPC

B. FIELDS SEARCHED

Minimum documentation searched (classification system followed by classification symbols)
C09J7/02, C09J5/00, C09J121/00, C09J133/04, C09J183/04, E04F13/07

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | Microfilm of the specification and drawings annexed to the request of Japanese Utility Model Application No. 085575/1972(Laid-open No. 042167/1974) (Nitto Electric Industrial Co., Ltd.), 13 April 1974 (13.04.1974), claims; pages 1 to 5; figures (Family: none) | 1-4,7-9 |
| A | JP 2002-121503 A  (3M Innovative Properties Co.), 26 April 2002 (26.04.2002), claims; figures (Family: none) | 1-9 |

| ☒ | Further documents are listed in the continuation of Box C. | ☐ | See patent family annex. |

| | Special categories of cited documents: | |
| --- | --- | --- |
| "A" | document defining the general state of the art which is not considered   to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 October 2017 (04.10.17) | 17 October 2017 (17.10.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2017/031986

C (Continuation). DOCUMENTS CONSIDERED TO BE RELEVANT

| Category* | Citation of document, with indication, where appropriate, of the relevant passages | Relevant to claim No. |
|---|---|---|
| A | JP 09-227843 A (Sekisui Chemical Co., Ltd.), 02 September 1997 (02.09.1997), claims; figures (Family: none) | 1-9 |
| P,A | WO 2016/143731 A1 (Nitto Denko Corp.), 15 September 2016 (15.09.2016), claims & JP 2017-14523 A & TW 201632348 A | 1-9 |
| P,A | WO 2017/065275 A1 (Nitto Denko Corp.), 20 April 2017 (20.04.2017), claims & JP 2017-75307 A | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7278504 A